# EUROPÄISCHE PATENTSCHRIFT

(11) **EP 3 027 437 B1**
(45) Veröffentlichungstag und Bekanntmachung des Hinweises auf die Patenterteilung: **20.06.2018**
(21) Anmeldenummer: 14742228.1
(22) Anmeldetag: 24.07.2014
(51) Int. Cl.: B60G 7/00, B60G 7/02, B60G 9/00, B60G 11/28, B60G 11/27

(54) **LENKEREINHEIT**
SUSPENSION ARM
BRAS DE SUSPENSION

(30) Priorität: 29.07.2013 DE 102013214737
(43) Veröffentlichungstag der Anmeldung: 08.06.2016
(73) Patentinhaber: SAF-HOLLAND GmbH, 63856 Bessenbach (DE)
(72) Erfinder: SPIELMANN, Rolf, 97877 Wertheim-Bettingen (DE)
(74) Vertreter: Müller Schupfner & Partner Patent- und Rechtsanwaltspartnerschaft mbB
(86) Internationale Anmeldenummer: PCT/EP2014/065895
(87) Internationale Veröffentlichungsnummer: WO 2015/014702

(56) Entgegenhaltungen:
- WO-A1-97/42047
- WO-A1-2007/042123
- WO-A1-2010/095924
- WO-A2-2012/135200
- DE-B3- 10 231 376
- DE-U1- 29 616 257
- DE-U1- 29 824 897
- DE-U1-202008 014 426
- US-A- 4 415 179
- US-A- 5 127 668
- US-A- 5 375 871
- US-A1- 2002 135 225
- US-A1- 2011 095 501
- US-B1- 6 834 874

## Beschreibung

Die vorliegende Erfindung betrifft eine Lenkereinheit insbesondere für Nutzfahrzeuge sowie ein Fahrwerkssystem für Nutzfahrzeuge und ein Herstellungsverfahren zur Herstellung einer Trägereinheit.

Lenkereinheiten sind aus dem Stand der Technik hinlänglich bekannt und werden insbesondere bevorzugt mit luftgefederten Fahrwerken in Nutzfahrzeugen eingesetzt. Dabei dient ein so genannter Längslenker, bzw. eine Lenkereinheit der gefederten Lagerung eines Aufhängungsbereiches für die Räder des Nutzfahrzeuges. Hierfür ist die Lenkereinheit üblicherweise schwenkbar am Rahmen des Fahrzeuges, beispielsweise an einem Lagerbock aufgehängt und weist einen Lagerbereich zur Festlegung einer Federeinheit, beispielsweise einer Luftfeder, auf. Es hat sich dabei das Problem ergeben, dass aufgrund unterschiedlicher Spurweiten, unterschiedlicher Rahmengeometrien an verschiedenen Nutzfahrzeugtypen und einer Vielzahl möglicher Luftfedergeometrien ein breites Spektrum an Geometrien der Lenkereinheiten benötigt wird. Um diesen Anforderungen zu genügen, musste bisher eine nahezu unüberschaubare Zahl an Geometrien für Lenkereinheiten bereitgestellt werden. Man hat bisher versucht dem Problem damit zu begegnen, dass an dem Luftfederbefestigungsbereich der Lenkereinheit eine Vielzahl von Befestigungspunkten vorgesehen sind, von denen dann zur Befestigung der Federeinheit jeweils nur einer verwendet wird. Solche Lenkereinheiten können in einer gewissen Anzahl von Fahrwerksgeometrien eingesetzt werden. Gleichzeitig resultiert aus dieser Auslegung aber auch eine Überdimensionierung der Lenkereinheit, welche sich nachteilig auf das Gewicht und den Bauraumbedarf der Lenkereinheit auswirkt. Es besteht daher auch weiterhin ein erheblicher Bedarf an der Verbesserung der vielseitigen Einsetzbarkeit von Lenkereinheiten sowie einer Reduzierung der Herstellungskosten durch Vereinheitlichung einzelner Baugruppen sowie eine Reduzierung des Gewichts und des von der Lenkereinheit benötigten Bauraumes.

Die WO 2010/095924 A1 offenbart eine Lenkereinheit, insbesondere für Nutzfahrzeuge, umfassend eine Führungseinheit und eine Trägereinheit, wobei die Trägereinheit einen zweiten Befestigungsabschnitt zur Festlegung an einem ersten Befestigungsabschnitt der Führungseinheit und einen Tragabschnitt zur Aufnahme einer Federeinheit aufweist, wobei eine zweite Ebene orthogonal zu einer Breite des zweiten Befestigungsabschnitts der Trägereinheit ausgerichtet ist, wobei der Tragabschnitt asymmetrisch zur zweiten Ebene ausgebildet ist, wobei sich die Führungseinheit überwiegend längs einer ersten Ebene erstreckt, wobei in einem montierten Zustand, in dem die Trägereinheit im zweiten Befestigungsabschnitt am ersten Befestigungsabschnitt festgelegt ist, die erste Ebene parallel zur zweiten Ebene ausgerichtet ist, wobei die erste Ebene orthogonal zu einer Schwenkachse der schwenkbaren Lagerung der Führungseinheit in einem Lagerabschnitt ausgerichtet ist, wobei die erste Ebene mittig durch den Lagerabschnitt der Führungseinheit verläuft, und wobei die zweite Ebene mittig und quer zum zweiten Befestigungsabschnitt der Trägereinheit liegt

Die US 5,375,871 A beschreibt offenbart einen aus mehreren Blechteilen zusammengesetzten geschweißten Lenker, welcher wiederum über eine Schale am Achsrohr des Nutzfahrzeuges festschweißbar ist, wobei der Abschnitt zur Aufnahme einer Luftfeder asymmetrisch ausgebildet ist.

Die US 4,415,179 A offenbart einen Längslenker, bei welchem ein vorderer Abschnitt über U-förmig ausgebildete Schraubbolzen gegen einen unteren bzw. vorderen Lenkerabschnitt und das Achsrohr verklemmbar ist, wobei der Luftfederaufnahmebereich eine von der Längsrichtung des Nutzfahrzeuges abweichende Gesamterstreckungsrichtung aufweist.

Die WO 2007/042124 A1 offenbart ein Verfahren zur Herstellung einer Trägereinheit, umfassend die Schritte: Bereitstellen eines rohrförmigen Grundkörpers; Durchführen eines Umformverfahrens an dem Grundkörper, wobei die Außengeometrie des Grundkörpers derart verformt wird, dass zumindest zwei Befestigungsflächen daran ausgebildet werden; Anwenden eines Trennverfahrens auf den verformten Grundkörper, wobei aus dem Grundkörper zumindest zwei Trägereinheiten hergestellt werden, wobei jede Trägereinheit einen zweiten Befestigungsabschnitt und einen Tragabschnitt aufweist, und wobei eine zweite Ebene mittig und quer zum zweiten Befestigungsabschnitt der Trägereinheit lieg

Aufgabe der vorliegenden Erfindung ist es eine Lenkereinheit bereitzustellen, welche vielseitig einsetzbar ist und eine Überdimensionierung des Gewichts und des benötigen Bauraumes vermeidet. Weiterhin ist es eine Aufgabe der vorliegenden Erfindung, ein Fahrwerkssystem bereitzustellen, welches unter Vermeidung der eingangs genannten Nachteile des Standes der Technik einfach und günstig herzustellen ist. Ferner ist es die Aufgabe der vorliegenden Erfindung, ein Herstellungsverfahren anzugeben, mit welchem auf einfache Weise Lenkereinheiten hergestellt werden können.

Diese Aufgabe wird gelöst mit einer Lenkereinheit gemäß Anspruch 1, sowie einem Fahrwerkssystem gemäß Anspruch 8 und einem Verfahren gemäß Anspruch 14. Erfindungsgemäß umfasst die Lenkereinheit eine Führungseinheit und eine Trägereinheit, wobei die Führungseinheit an einem ersten distalen Ende einen ersten Befestigungsabschnitt aufweist, wobei die Trägereinheit einen zweiten Befestigungsabschnitt zur Festlegung am ersten Befestigungsabschnitt, und einen Tragabschnitt zur Aufnahme einer Federeinheit aufweist, wobei eine zweite Ebene orthogonal zu einer Breite des zweiten Befestigungsabschnitts der Trägereinheit ausgerichtet ist und wobei der Tragabschnitt asymmetrisch zur zweiten Ebene ausgebildet ist. Die Lenkereinheit besteht aus zwei wesentlichen Baugruppen, der Führungseinheit und der Trägereineinheit, wobei beide Baugruppen vor der Montage getrennt voneinander herstellbar und bearbeitbar sind und in einem montierten Zustand, d. h. nach Montage der Lenkereinheit fest miteinander verbunden sind. Dabei weisen sowohl die Führungseinheit als auch die Trägereinheit einen Befestigungsabschnitt auf, welche vorzugsweise derart geometrisch miteinander korrespondieren, dass die Trägereinheit mit geringem Aufwand an der Führungseinheit festlegbar ist. Dies bedeutet z. B., dass entsprechende Schweißflächen vorgesehen sind, die geometrisch miteinander korrespondieren und einen entsprechenden Rand zur Einfügung einer Schweißnaht definieren. Alternativ bevorzugt könnte auch ein entsprechender Verschraubungsbereich vorgesehen sein, in welchem die Trägereinheit an der Führungseinheit festschraubbar ist. Weiterhin bevorzugt sind an den entsprechenden Befestigungsflächen der Trägereinheit und der Führungseinheit vorzugsweise Vor- oder Rücksprünge vorgesehen, die formschlüssig ineinander greifen können und so eine einfachere Positionierung der Trägereinheit an der Führungseinheit ermöglichen. Bevorzugt sind an der Führungseinheit zwei längliche Vorsprünge vorgesehen, die mit zwei an der Trägereinheit vorgesehenen, ebenfalls länglich ausgebildeten Rücksprüngen in formschlüssigen Eingriff bringbar sind. Die Trägereinheit ist insbesondere bevorzugt der Befestigungsbereich für eine Federeinheit, vorzugsweise eine Luftfeder eines Nutzfahrzeugfahrwerkes, und wird auch als "tail end" bezeichnet. Die Führungseinheit ist vorzugsweise der sich länglich erstreckende Teil eines Längslenkers eines Nutzfahrzeugfahrwerkes, welcher insbesondere der definierten und gefederten bzw. gedämpften Lagerung der starren Achse oder zumindest eines Achsstummels des Nutzfahrzeugfahrwerkes relativ zum Nutzfahrzeugrahmen dient. Hierfür überträgt die Führungseinheit Kräfte und Biegemomente bzw. ggf. auch Torsionsmomente über ihren ersten Befestigungsabschnitt sowie über ein bevorzugt vorgesehenen Lagerabschnitt zwischen dem Rahmen des Nutzfahrzeuges, der Trägereinheit und einem Befestigungsbereich für die starre Achse bzw. den Achsstummel des Nutzfahrzeugfahrwerkes. Die zweite Ebene ist vorzugsweise die Ebene, welche sowohl quer, bzw. senkrecht zu einer Befestigungsfläche, als auch orthogonal zur Breite des zweiten Befestigungsabschnitts ausgerichtet ist. Die Breite des zweiten Befestigungsabschnitts wird vorzugsweise in horizontaler Richtung bzw. bevorzugt in einer Richtung, die parallel zur Befestigungsfläche verläuft, gemessen. Besonders bevorzugt ist es, dass die zweite Ebene die Breite des zweiten Befestigungsabschnitts halbiert. Bevorzugt ist die zweite Ebene derart in der Trägereinheit angeordnet, dass sie den zweiten Befestigungsabschnitt in zwei gleich große Teilbefestigungsabschnitte teilt. Insbesondere, wenn der zweite Befestigungsabschnitt eine von einer rechteckigen Form abweichende Form aufweist, ist es bevorzugt, dass die Breite des Befestigungsabschnitts als mittlere Breite angenommen wird, wobei bei halber Breite die zweite Ebene in der Trägereinheit liegt.

Vorzugsweise ist ein Befestigungsmittel am Tragbereich der Trägereinheit vorgesehen ist, welches einen orthogonalen Versatz zur zweiten Ebene aufweist. Zur Festlegung einer Federeinheit am Tragbereich der Trägereinheit ist vorzugsweise zumindest ein Befestigungsmittel vorgesehen. Das Befestigungsmittel ist bevorzugt als Bohrung ausgeführt. Dieses Befestigungsmittel an dem Tragbereich der Trägereinheit greift vorzugsweise direkt oder indirekt in entsprechende weitere Befestigungsmittel oder unmittelbar in einen Befestigungsbereich einer Federeinheit ein und legt diese an der Trägereinheit fest. Das Befestigungsmittel weist vorzugsweise einen orthogonalen, bzw. senkrechten Versatz zur zweiten Ebene auf. Insbesondere bevorzugt ist es, dass im montierten Zustand das Befestigungsmittel auch einen orthogonalen Versatz zur ersten Ebene aufweist.

Weiterhin bevorzugt ist es, dass zumindest zwei Befestigungsmittel am Tragbereich vorgesehen sind, welche jeweils einen orthogonalen Versatz zur zweiten Ebene aufweisen, wobei sich besonders bevorzugt der Versatz des ersten Befestigungsmittels vom Versatz des zweiten Befestigungsmittels unterscheidet. Insbesondere bevorzugt sind die beiden Befestigungsmittel dabei auf einer orthogonal zur zweiten Ebene verlaufenen Geraden angeordnet und weisen jeweils einen unterschiedlichen Abstand zur zweiten Ebene auf. Durch diese besonders bevorzugte Ausführung ist es möglich, mittels Drehen oder Tauschen der Trägereinheit verschiedene Befestigungspositionen für eine Federeinheit an der Lenkereinheit vorzusehen. Dabei wird die Befestigungsposition der Federeinheit relativ zur Lenkereinheit, jeweils bevorzugt durch die Position des oder der Befestigungsmittel, definiert. Besonders bevorzugt ist eine Vielzahl von Befestigungsmitteln am Tragbereich vorgesehen, von denen nur eines in der zweiten Ebene liegt und alle anderen Befestigungsmittel jeweils einen orthogonalen Versatz zur zweiten Ebene aufweisen, wobei sich der Versatz der einzelnen Befestigungsmittel besonders bevorzugt voneinander unterscheidet. Durch eine günstige Aufteilung des Versatzes der jeweiligen Befestigungsmittel lässt sich somit eine Vielzahl von möglichen Kombinationen für Befestigungspositionen einer Federeinheit an der Lenkereinheit einrichten, welche durch die Möglichkeit, die Trägereinheit relativ zur Führungseinheit um 180° verdreht oder durch Austauschen mit einer spiegelsymmetrisch ausgebildeten zweiten Trägereinheit, verdoppeln lassen.

Mit Vorteil erstreckt sich die Führungseinheit im Wesentlichen längs einer ersten Ebene, wobei im montieren Zustand, in dem die Trägereinheit im zweiten Befestigungsabschnitt am ersten Befestigungsabschnitt der Führungseinheit festgelegt ist, die erste Ebene parallel zur zweiten Ebene liegt. Im vorliegenden Fall ist die erste Eben vorzugsweise eine vertikal im Raum stehende und sich in Fahrzeuglängsrichtung erstreckende Ebene, wobei die erste Ebene im Bezug auf die Lenkereinheit vorzugsweise die Ebene ist, welche orthogonal zu der Achse, um welche die Führungseinheit schwenkbar am Rahmen des Nutzfahrzeuges festlegbar ist, steht. Die Führungseinheit ist dabei vorzugsweise ein Rohr oder bevorzugt hohlkörperförmiges Bauteil, wobei es aber insbesondere bevorzugt ist, dass kraftflussoptimierte Geometrien vorgesehen sind, welche sich beispielsweise in einer nicht linearen bzw. nicht zylinderförmigen Erstreckung der Führungseinheit zeigen. Diese Geometrien sind mit Vorteil durch entsprechende Rundungen und gekrümmte Außen- und Innenflächen derart kraftflussoptimiert, dass bei einem geringen Eigengewicht der Führungseinheit hohe Kräfte und Momente übertragen werden können. In diesem Zusammenhang ist es also bevorzugt, dass sich die Führungseinheit nicht geradlinig längs der ersten Eben erstreckt, sondern durchaus Bereiche mit größerem und Bereiche mit geringerem Abstand zur ersten Ebene aufweist. Die Trägereinheit ist im montierten Zustand, d. h. in dem Zustand, in dem die Trägereinheit über ihren zweiten Befestigungsabschnitt am ersten Befestigungsabschnitt der Führungseinheit festgelegt ist, vorzugsweise auch asymmetrisch zur ersten Ebene ausgebildet. Besonders bevorzugt ist dabei eine asymmetrische Geometrie des Tragbereiches der Trägereinheit zu jeder beliebigen Parallelebene der ersten Ebene gegeben, d. h. mit anderen Worten, dass die Trägereinheit in ihrem eingebauten Zustand asymmetrisch im Bezug auf eine vertikale Ebene ausgebildet ist. Vorzugsweise ist der montierte Zustand der Trägereinheit an der Führungseinheit dadurch definiert, dass eine an der Trägereinheit vorgesehene Befestigungsfläche im Wesentlichen horizontal ausgerichtet bzw. mit anderen Worten senkrecht zur ersten Eben ausgerichtet ist.

Bevorzugt weist der Tragabschnitt eine Befestigungsfläche auf, welche sich im Wesentlichen quer zur zweiten Ebene erstreckt. "Im Wesentlichen" kann als "im überwiegenden Teil" verstanden werden. Demnach weist die Befestigungsfläche vorzugsweise aus einem großflächigen, plattenförmigen, bzw. ebenen Teil auf, welcher quer zur zweiten Ebene steht. In den Randbereichen, aber auch wenn bevorzugte Vor- oder Rücksprünge auf der Befestigungsfläche vorgesehen sind, weicht die Geometrie der Befestigungsfläche bereichsweise von der ebenen Form ab, wobei diese Bereiche nach der Formulierung "im Wesentlichen" trotzdem zur Befestigungsfläche gezählt werden können. Analog hierzu kann die Formulierung "im Wesentlichen" auch für weitere Merkmale dieser Anmeldung verstanden werden.

Mit Vorteil weist die Führungseinheit an ihrem, dem ersten Befestigungsabschnitt gegenüber liegenden, distalen Ende einen Lagerabschnitt zur schwenkbaren Lagerung an einem Fahrzeugrahmen auf, wobei die Schwenkachse der schwenkbaren Lagerung orthogonal, bzw. senkrecht zur ersten Ebene liegt. Der Lagerabschnitt der Führungseinheit ist vorzugsweise als Lagerauge ausgebildet, in welchem besonders bevorzugt eine Buchse bzw. eine Hülse eingesetzt werden kann, über welche die Führungseinheit an einem Fahrzeugrahmen, insbesondere bevorzugt am Lagerbock eines Fahrzeugrahmens, schwenkbar lagerbar, oder vorzugsweise gelagert ist. Besonders bevorzugt ist dabei, dass sich die Lage der ersten Ebene in der Führungseinheit über die schwenkbare Lagerung der Führungseinheit definiert.

Erfindungsgemäß liegt die erste Ebene orthogonal zur Schwenkachse der schwenkbaren Lagerung der Führungseinheit. Besonders bevorzugt erstreckt sich der erste Befestigungsabschnitt tangential zu einer um die Schwenkachse verlaufenden Kreisbahn. Der erste Befestigungsabschnitt ist vorzugsweise als Flächenabschnitt ausgebildet, welcher bevorzugt als Schweißfläche zur Festlegung des zweiten Befestigungsabschnitts der Trägereinheit am ersten Befestigungsabschnitt der Führungseinheit dient. Dabei ist es besonders bevorzugt, dass die Schweißfläche im Wesentlichen als ebene Fläche ausgebildet ist, welche sich tangential zu einer im die Schwenkachse verlaufenden Kreisbahn erstreckt. Alternativ bevorzugt ist es, dass der erste Befestigungsabschnitt als gekrümmte Fläche ausgebildet ist, wobei die Krümmung vorzugsweise im Wesentlichen entlang einer um die Schwenkachse verlaufenden Kreisbahn verläuft. Mittels eines gekrümmten ersten Befestigungsabschnitts ist es möglich, bei der Auswahl verschiedener Befestigungspositionen der Trägereinheit am ersten Befestigungsabschnitt gleichzeitig sowohl die vertikale Position bzw. Ausrichtung der Trägereinheit relativ zur Führungseinheit auszuwählen, als auch gleichzeitig einen bestimmten Winkelversatz der Trägereinheit relativ zur Führungseinheit und damit auch einen Winkelversatz der Befestigungsfläche relativ zur Führungseinheit einzustellen. Auf diese Weise kann bevorzugt erreicht werden, dass eine an der Trägereinheit befestigte Federeinheit stets möglichst senkrecht ein- und ausfedern kann, während sich die Lenkereinheit in einem vorgesehenen Schwenkbereich relativ zum Rahmen des Fahrzeuges verlagert.

Ferner bevorzugt weist der Tragabschnitt wenigstens ein Befestigungsmittel zur Festlegung einer Federeinheit auf, welches im montierten Zustand der Lenkereinheit von der ersten Ebene beabstandet ist. Insbesondere bevorzugt ist es dabei, dass die vorzugsweise an der Trägereinheit vorgesehene Befestigungsfläche im Wesentlichen parallel zu einer um die Schwenkachse, um welche die Führungseinheit schwenkbar ist, liegenden Ebene ausgerichtet ist. Dies ergibt sich vorzugsweise durch die geometrische Definition der zweiten Ebene über die Befestigungsfläche und die geometrische Definition der ersten Ebene über die Schwenkachse. Weiterhin bevorzugt weist der Tragabschnitt wenigstens ein Befestigungsmittel zur Festlegung einer Federeinheit auf, wobei das Befestigungsmittel vorzugsweise ein Vorsprung, welcher beispielsweise mit dem Tauchkolben einer Federeinheit in Eingriff bringbar ist, oder vorzugsweise in Eingriff steht, oder vorzugsweise eine Bohrung ist, durch welche eine Schraube zur Festlegung einer Federeinheit an dem Tragschnitt hindurchgeführt werden kann. Besonders bevorzugt ist es dabei, dass das Befestigungsmittel von der zweiten Ebene beabstandet ist, wodurch sich bei Verdrehen der Trägereinheit oder bei Einsetzen einer spiegelsymmetrisch ausgeführten zweiten Trägereinheit mit gleichen geometrischen Definitionen wie der ersten hier beschriebenen Trägereinheit, zumindest zwei im Bezug auf die Führungseinheit verschiedene Befestigungspositionen einer Federeinheit an der Lenkereinheit ergeben.

Besonderes bevorzugt ist es, dass die Trägereinheit als linke Trägereinheit oder als rechte Trägereinheit ausgebildet ist. Vorzugsweise ist eine als linke Trägereinheit ausgebildete Trägereinheit dadurch gekennzeichnet, dass von dem zweiten Befestigungsabschnitt der Trägereinheit aus gesehen, der links der zweiten Ebene liegende Teil der Befestigungsfläche der Trägereinheit größer ist, als der rechts der zweiten Ebene liegende Teil der Befestigungsfläche. Für eine als rechte Trägereinheit ausgebildete Trägereinheit gilt entsprechend, dass vorzugsweise der rechts der zweiten Ebene liegende Teil der Befestigungsfläche größer ist, als der links der zweiten Ebene liegende Teil. Weiterhin bevorzugt kann als Kriterium auch eine größere oder kleinere Anzahl der jeweils links und rechts der zweiten Ebene vorgesehenen Befestigungsmittel dienen. So können beispielsweise bei einer als linke Trägereinheit ausgebildeten Trägereinheit links der zweiten Ebene mehr Befestigungsmittel vorgesehen sein, als rechts der zweiten Ebene, vom zweiten Befestigungsabschnitt aus gesehen. Insbesondere bevorzugt ist es, dass die als linke Trägereinheit ausgebildete Trägereinheit von oben gesehen, d. h. mit Blick senkrecht auf die Befestigungsfläche, auf ihrer von dem zweiten Befestigungsabschnitt links liegenden Seite eine durchgehend konvexe Krümmung aufweist und an der gegenüberliegenden Seite eine zumindest bereichweise konkave Krümmung. Besonders bevorzugt sind dabei die linke Trägereinheit und die rechte Trägereinheit spiegelsymmetrisch zueinander ausgeführt. Dabei liegt die Symmetrieebene der Spiegelsymmetrie vorzugsweise parallel zu den zweiten Ebenen der linken und der rechten Trägereinheit.

In einer bevorzugten Ausführungsform weist die Trägereinheit zwei gegenüberliegende Befestigungsflächen auf, wobei der Tragbereich ebenensymmetrisch zu einer zwischen den Befestigungsflächen liegenden Ebene ist. Insbesondere bevorzugt ist es dabei, dass die Ebene, welche zwischen den Befestigungsflächen der Trägereinheit liegt, im Wesentlichen senkrecht zur zweiten Ebene ausgerichtet ist. Bei einer Verdrehung, Verschwenkung der Trägereinheit um die Schnittlinie zwischen der zweiten Ebene und der Symmetrieebene des Tragbereiches, in eine um 180° verdrehte Schwenkposition, ist es somit möglich, statt der einen Befestigungsfläche die jeweils gegenüberliegende Befestigungsfläche derart auszurichten, dass eine Federeinheit daran befestigt werden kann. In Kombination mit dem Merkmal der Trägereinheit, dass dieses asymmetrisch zur zweiten Ebene ausgebildet ist, ergeben sich so bevorzugt bei Wahl einer der beiden Schwenkpositionen der Trägereinheit um die Schnittgerade bzw. Schnittlinie zwei Möglichkeiten, die bevorzugt an der Trägereinheit vorgesehenen Befestigungsmittel im montieren Zustand der Trägereinheit relativ zur Führungseinheit anzuordnen. Es sind vorzugsweise zumindest zwei als Bohrung ausgeführte Befestigungsmittel an der Trägereinheit vorgesehen, welche den Tragbereich besonders bevorzugt vollständig durchragen und jeweils verschieden von der zweiten Ebene beabstandet sind. So ergeben sich in einer ersten Schwenkposition der Trägereinheit relativ zur Führungseinheit zwei Befestigungspositionen einer Federeinheit und bei Verdrehung der Trägereinheit um 180° um die Schnittlinie zwei weitere Befestigungspositionen für eine Federeinheit. Ebenfalls bevorzugt könnten auf jeder Seite der Trägereinheit und somit an jeder der beiden Befestigungsflächen insgesamt vier einzelne Befestigungsmittel vorgesehen sein, welche jeweils einen unterschiedlichen Abstand zur zweiten Ebene aufweisen. Es versteht sich, dass durch Erhöhung der Anzahl an Befestigungsmitteln auch die Anzahl der möglichen Befestigungspositionen einer Federeinheit an der Lenkereinheit erhöht werden kann. Hierbei ist es insbesondere bevorzugt, dass eine ausgewählte Anzahl an Standardbefestigungspositionen durch Anordnen der Trägereinheit an der Führungseinheit einstellbar ist, wobei mit Vorteil die Lenkereinheit an die bei Nutzfahrzeugen üblichen Fahrwerks- und Rahmenbreiten entsprechend angepasst werden kann.

Erfindungsgemäß ist ein Fahrwerkssystem für Nutzfahrzeuge vorgesehen, umfassend einen Rahmen und zwei am Rahmen schwenkbar festlegbare Lenkereinheiten, wobei der Rahmen eine Querrichtung aufweist, wobei jede der Lenkereinheiten eine Trägereinheit mit zumindest einem Befestigungsmittel aufweist, wobei durch Verdrehen der Befestigungslage der Trägereinheit an der jeweiligen Führungseinheit und/oder durch Vertauschen der Trägereinheiten miteinander zumindest ein Befestigungsmittel in eine parallel zur Querrichtung verlagerte, bzw. verschobene Position bringbar ist. Das Fahrwerkssystem für Nutzfahrzeuge umfasst vorzugsweise die zur Verbindung zweier Räder mit Rahmen des Nutzfahrzeuges nötigen Bauteile, wie Lenkereinheiten, Federeinheiten und weitere Periphersysteme des Fahrwerks des Nutzfahrzeuges. Dabei sind zumindest zwei der zuvor beschriebenen Lenkereinheiten am Rahmen schwenkbar festgelegt. Der Rahmen weist eine Querrichtung auf, welche besonders bevorzugt parallel zur Schwenkachse, bzw. zu den Schwenkachsen der Lenkereinheiten liegt. Weiterhin weisen die Lenkereinheiten je eine Trägereinheit auf, wobei die Trägereinheiten derart ausgebildet sind, dass durch Verdrehen oder durch Vertauschen der Trägereinheiten miteinander, zumindest eines der an den Trägereinheiten vorgesehenen Befestigungsmittel in einer von zumindest zwei möglichen Positionen relativ zum Rahmen bzw. relativ zur Querrichtung des Rahmens anordenbar ist.

Mit Vorteil weist das Fahrwerkssystem zwei Lenkereinheiten auf, wobei an einer der beiden Führungseinheiten eine linke Trägereinheit oder eine rechte Trägereinheit festlegbar, bzw. festgelegt ist und an der jeweils anderen Führungseinheit eine rechte Trägereinheit oder eine linke Trägereinheit festlegbar ist, wobei bezogen auf eine mittig zwischen den beiden ersten Ebenen der Lenkereinheiten liegende Ebene, verschiedene Befestigungspositionen für eine Federeinheit an den Trägereinheiten vorgesehen sind. Es ist also vorzugsweise auch möglich, zwei linke Trägereinheiten am Fahrwerkssystem vorzusehen, wobei durch Austauschen der beiden linken Trägereinheiten mit je einer rechten Trägereinheit, andere Befestigungspositionen zur Verfügung stehen. Diese bevorzugte Ausführungsform eignet sich um asymmetrische Rahmenkonstruktionen von Nutzfahrzeugen ebenfalls mit erfindungsgemäßen, kostengünstig herzustellenden Fahrwerkssystemen ausstatten zu können.

Bevorzugt weist das Fahrwerkssystem zwei Lenkereinheiten auf, wobei eine erste Lenkereinheit eine linke Trägereinheit und eine zweite Lenkereinheit eine rechte Trägereinheit aufweist, wobei die linke Trägereinheit an einer der beiden Führungseinheiten und die rechte Trägereinheit an der jeweils anderen Führungseinheit festlegbar ist, wobei das Befestigungsmittel der linken Trägereinheit einen ersten Abstand vom Befestigungsmittel der rechten Trägereinheit aufweist. Bevorzugt ist es, dass durch Vertauschen der linken und der rechten Trägereinheit miteinander und Festlegen an den jeweiligen Führungseinheiten, der Abstand des Befestigungsmittels der linken Trägereinheit vom Befestigungsmittel der rechten Trägereinheit geändert werden kann. Dabei ist es zunächst bevorzugt vorgesehen, dass die linke Trägereinheit in Fahrzeuglängsrichtung gesehen an der links angeordneten Lenkereinheit bzw. Führungseinheit der links angeordneten Lenkereinheit befestigt ist und die rechte Trägereinheit an der rechts am Fahrzeugrahmen festgelegten Lenkereinheit bzw. Führungseinheit festgelegt ist. Bei dieser Festlegung ergibt sich ein erster möglicher Abstand des Befestigungsmittels der linken Trägereinheit vom Befestigungsmittel der rechten Trägereinheit. In einer zweiten alternativen Anordnung der linken und der rechten Trägereinheit an dem Fahrwerkssystem kann auch die linke Trägereinheit an der rechten Seite und die rechte Trägereinheit an der linken Seite des Nutzfahrzeuges angeordnet werden, wodurch ein anderer Abstand der beiden Befestigungsmittel zueinander einstellbar ist. Dieses Grundprinzip ermöglicht es durch Auswahl der Befestigungsposition einer Federeinheit an der Lenkereinheit, welche sich durch Auswahl der Befestigungsposition oder Lage der linken bzw. rechten Trägereinheit bestimmen lässt, verschieden große Federeinheiten am Fahrzeugrahmen festzulegen oder verschiedene Fahrzeugrahmentypen oder -breiten mit dem selben Satz von Lenkereinheiten, d. h. Führungseinheit und Trägereinheit, verbinden zu können. Der große Vorteil der beschriebenen Erfindung ist also, dass mit einem Satz zweier Führungseinheiten, die immer identisch ausgebildet sein können, und einem Satz linker bzw. rechter Trägereinheiten es möglich wird, nahezu alle bekannten Fahrwerkstypen bzw. Nutzfahrzeugfahrwerke ausstatten zu können.

Vorzugsweise weist das Fahrwerkssystem zwei Lenkereinheiten auf, an welchen ebenensymmetrisch ausgebildete Trägereinheiten vorgesehen sind, wobei die Trägereinheiten jeweils in einer von zwei Befestigungslagen an der jeweiligen Führungseinheit festlegbar sind, derart, dass die Befestigungsmittel der Trägereinheiten einen von zwei möglichen Abständen voneinander aufweisen. Mit anderen Worten werden also die spiegelsymmetrisch um eine im Wesentlichen parallel zu zwei Befestigungsflächen ausgebildeten Trägereinheiten verwendet, welche jeweils in einer ersten Position an der Führungseinheit festlegbar sind oder in einer um 180° gedrehten zweiten Befestigungslage an der Führungseinheit festlegbar sind. Vorteilhaft bei dieser bevorzugten Ausführungsform ist, dass anstelle einer linken und einer rechten Trägereinheit nur ein einziger Typ von Trägereinheiten notwendig ist, von dem jeweils zwei im Fahrwerkssystem eingesetzt werden, wobei durch Verdrehen der Befestigungslage der Trägereinheit an der Führungseinheit zumindest zwei verschiedene Abstände der Befestigungsmittel der einen Trägereinheit von den Befestigungsmitteln der anderen Trägereinheit einstellbar sind. Erfindungsgemäß ist im montierten Zustand der Lenkereinheiten der Abstand der zweiten Ebene von der jeweiligen ersten Ebene gleich dem Abstand zumindest eines Befestigungsmittels von der zweiten Ebene. Da die erste Ebene der Lenkereinheit als Referenzgeometrie für die Führungseinheit der Lenkereinheit gesehen werden kann, wobei die Führungseinheit vorzugsweise in einer konstanten Position relativ zur Querrichtung des Rahmens mit dem Rahmen des Nutzfahrzeuges schwenkbar festgelegt ist, ist der Abstand des Befestigungsmittels relativ zur ersten Ebene gleichbedeutend mit dem Abstand des Befestigungspunktes, an welchem eine Federeinheit an der Lenkereinheit festgelegt werden kann, vom Rahmen des Nutzfahrzeuges in Querrichtung. Die zweite Ebene der Trägereinheit liegt mittig und quer zum zweiten Befestigungsabschnitt der Trägereinheit und ist daher vorzugsweise unabhängig davon, ob die Trägereinheit in einer verdrehten Einbaulage oder als linke oder rechte Trägereinheit an der Führungseinheit angeordnet ist, immer mit demselben Abstand zur ersten Ebene angeordnet. Für den erfindungsgemäßen Fall, dass eines der Befestigungsmittel einen Abstand von der zweiten Ebene aufweist, der gleich dem Abstand der zweiten Ebene von der ersten Ebene ist, liegt in einer der möglichen Einbaulagen bzw. Einbaupositionen der Trägereinheit das zweite Befestigungsmittel in der ersten Ebene bzw. wird von der ersten Ebene geschnitten. In diesem erfindungsgemäßen Fall liegt das Befestigungsmittel daher genau in der Ebene, welche mittig durch den Lagerabschnitt der Führungseinheit verläuft und somit treten bei Belastung bzw. bei Aufbringen einer Kraft auf das Befestigungsmittel senkrecht zur Befestigungsfläche keine Torsionsmomente in der Führungseinheit auf. Mit anderen Worten ist die Belastung der Führungseinheit in diesem Fall eine einfache Biegespannung im Material der Führungseinheit welche die zu erwartende Lebensdauer der Führungseinheit weniger stark reduziert. Weiterhin bevorzugt ist das Befestigungsmittel oder zumindest eines der Befestigungsmittel von der zweiten Ebene geschnitten, wobei dieses Befestigungsmittel bei Verdrehung oder vertauschter Anordnung der Trägereinheit einen gleichbleibenden Abstand zur ersten Ebene aufweist.

Weiterhin bevorzugt ist es, dass im montierten Zustand der Lenkereinheiten der Abstand der zweiten Ebene von der jeweiligen ersten Ebene ungleich dem Abstand eines Befestigungsmittels von der zweiten Ebene ist. Das Befestigungsmittel, welches einen Abstand von der zweiten Ebene aufweist, sich vom Abstand der zweiten Ebene zur ersten Ebene unterscheidet, wird bei Verdrehung oder bei vertauschter Anordnung der Trägereinheiten an der jeweiligen Führungseinheit, einen sich ändernden Abstand zur ersten Ebene aufweisen, wodurch mittels Verdrehen oder Vertauschen der Trägereinheit, zwei verschiedene Befestigungspositionen einer Federeinheit bezogen auf den Rahmen des Nutzfahrzeuges vorgesehen werden können. Insbesondere bevorzugt weisen die Trägereinheiten jeweils drei Befestigungsmittel auf, wobei zumindest zwei Befestigungsmittel von der zweiten Ebene beabstandet sind. Durch diese bevorzugte Ausführung der Trägereinheiten, welche eine ebenensymmetrisch ausgebildete Trägereinheit, eine linke oder eine rechte Trägereinheit sein können, ist es möglich, dass durch Verdrehen oder Vertauschen der Trägereinheiten zumindest zwei Befestigungsmittel eine andere Position, als sie in der jeweils anderen Verdreh- oder Befestigungsstellung haben würden, relativ zur ersten Ebene einnehmen. Es ergeben sich somit zumindest zehn mögliche Befestigungspositionen einer Federeinheit relativ zum Rahmen allein durch den Einsatz zwei erfindungsgemäßer Lenkereinheiten, die jeweils nur drei Befestigungsmittel aufweisen.

Erfindungsgemäß ist ein Verfahren zur Herstellung einer Trägereinheit (4) einer Lenkereinheit nach einem der Ansprüche 1 - 7, umfassend die Schritte:
a) Bereitstellen eines rohrförmigen Grundkörpers,
b) Durchführen eines Umformverfahrens an dem Grundkörper,
   wobei die Außengeometrie des Grundkörpers derart verformt wird, dass zumindest zwei Befestigungsflächen daran ausgebildet werden,
c) Anwenden eines Trennverfahrens auf den verformten Grundkörper, wobei aus dem Grundkörper zumindest zwei Trägereinheiten hergestellt werden,
   wobei jede Trägereinheit einen zweiten Befestigungsabschnitt und einen Tragabschnitt aufweist,
   wobei eine zweite Ebene mittig und quer zum zweiten Befestigungsabschnitt der Trägereinheit liegt, und wobei der Tragabschnitt asymmetrisch zur zweiten Ebene ausgebildet ist und ein von der zweiten Ebene beabstandetes Befestigungsmittel zur Festlegung einer Federeinheit am Tragabschnitt aufweist.
Das erfindungsgemäße Herstellungsverfahren zeichnet sich dadurch aus, dass mit wenigen Verfahrensschritten zumindest zwei, bevorzugt aber eine Vielzahl von Trägereinheiten herstellbar sind. Dabei kommt als Umformverfahren vorzugsweise Innenhochdruckumformen zum Einsatz, da mit diesem Verfahren auch komplexe, asymmetrische Strukturen geformt werden können. Während des Umformens werden an dem rohr- bzw. zylinderförmigen Grundkörper vorzugsweise eben ausgebildete Befestigungsflächen, an welchen später vorzugsweise eine Luftfeder festgelegt wird, ausgeformt. Vorzugsweise wird/werden während des Umformens auch ein oder eine Vielzahl von Befestigungsmitteln ausgebildet. Der derart umgeformte Grundkörper wird mittels eines Trennverfahrens in zumindest zwei, vorzugsweise eine Vielzahl von Trägereinheiten zerlegt. Als Trennverfahren eignet sich insbesondere Laserstrahlschneiden, welches eine hohe Schnittkantenqualität bei geringer Beeinflussung des Gefüges des Material im Schnittbereich gewährleistet. Alternativ könnte auch Wasserstrahlschneiden verwendet werden, da hierbei kaum Temperaturerhöhung an den Schnittkanten auftritt, wodurch die Gefügeveränderungen im Schnittkantenbereich noch geringer sind.

Weitere Vorteile und Merkmale der vorliegenden Erfindung ergeben sich aus der nachfolgenden Beschreibung mit Bezug auf die beigefügten Figuren. Es versteht sich, dass die für eine der Ausführungsformen gezeigten Merkmale auch in weiteren Ausführungsformen anwendbar sind, sofern dies nicht ausdrücklich ausgeschlossen wird. Es zeigen:
- Fig. 1: eine aus dem Stand der Technik bekannte Ausführungsform einer Lenkereinheit,
- Fig. 2a, 2b: zwei Draufsichten bevorzugter Ausführungsformen der erfindungsgemäßen Lenkereinheit,
- Fig. 3: eine Seitenansicht einer bevorzugten Ausführungsform des erfindungsgemäßen Fahrwerkssystems,
- Fig. 4: eine weitere Seitenansicht einer weiteren bevorzugten Ausführungsform des erfindungsgemäßen Fahrwerkssystems;
- Fig. 5: Draufsichten zweier bevorzugter Ausführungsformen einer linken und einer rechten Trägereinheit,
- Fig. 6: eine bevorzugte Ausführungsform einer ebenensymmetrisch ausgeführten Trägereinheit,
- Fig. 7: eine Seitenansicht einer bevorzugten Ausführungsform einer erfindungsgemäßen Lenkereinheit,
- Fig. 8: eine Draufsicht einer Ausführungsform des erfindungsgemäßen Fahrwerkssystems mit zwei erfindungsgemäßen Lenkereinheiten,
- Fig. 9: eine Draufsicht einer ausgehend von der in Fig.8 gezeigten Ausführungsform abgewandelten Ausführungsform, und
- Fig. 10a-c: Ansichten von Schritten des erfindungsgemäßen Verfahrens zur Herstellung einer Trägereinheit.

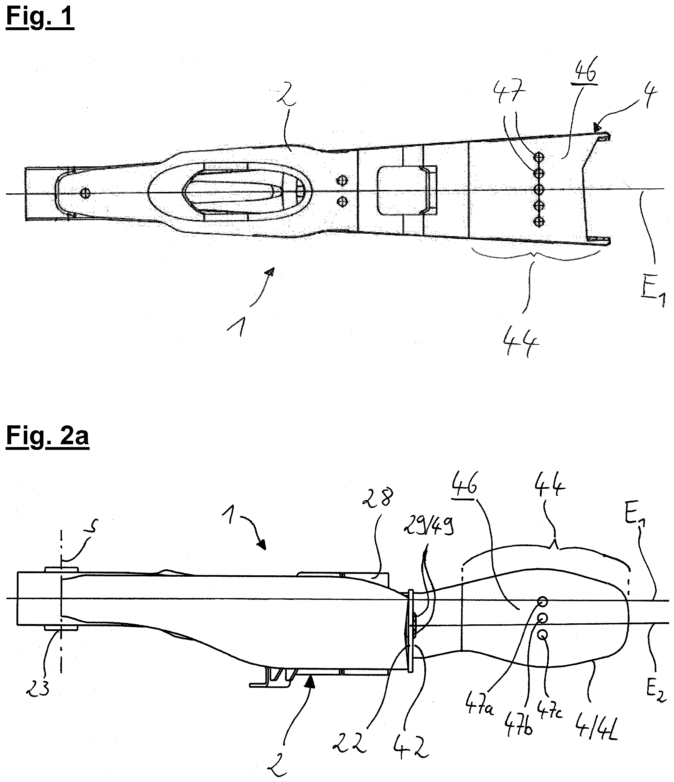

Fig. 1 zeigt eine Draufsicht einer aus dem Stand der Technik bekannten Lenkereinheit 1, wobei die Lenkereinheit 1 eine Führungseinheit 2 und eine einstückig mit der Führungseinheit ausgebildete Trägereinheit 4 aufweist, wobei die Trägereinheit 4 einen Tragabschnitt 44 aufweist, an welchem fünf Befestigungsmittel 47 vorgesehen sind. Die Befestigungsmittel 47 dienen dabei der Festlegung einer Federeinheit (nicht gezeigt), welche auf der Befestigungsfläche 46 aufgesetzt ist. Durch die bisher bekannten Anordnung von mehreren Befestigungsmitteln 47 nebeneinander, von denen aber jeweils nur eines oder eine geringe Zahl verwendet wurde, um eine Federeinheit an der Lenkereinheit 1 festzulegen, ergibt sich das Problem, dass ein großer Teil des Tragabschnitts 44 der Lenkereinheit 1 ungenutzt bleibt und somit das Gewicht und auch den von der Lenkereinheit 1 benötigten Bauraum unnötig erhöht. Weiterhin ist es aus dem Stand der Technik bekannt, eine Lenkereinheit 1 ebenensymmetrisch zu einer ersten Ebene E₁ auszubilden.

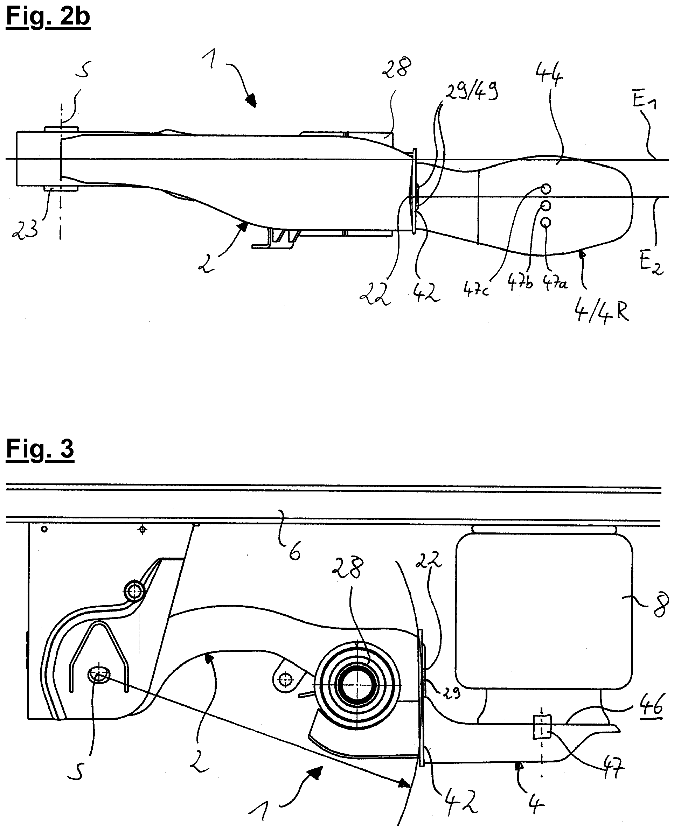

Fig. 2a zeigt eine erste Draufsicht einer bevorzugten Ausführungsform der erfindungsgemäßen Lenkereinheit 1 aufweisend eine Führungseinheit 2 und eine Trägereinheit 4. Die Führungseinheit 2 weist eine im Wesentlichen längliche Erstreckung auf, welche sich zum größten Teil in, bzw. längs einer ersten Ebene E₁ erstreckt. An einem ersten distalen Ende (in der Figur links) ist ein Lagerabschnitt 23 vorgesehen, in welchem die Führungseinheit 2 und somit vorzugsweise die gesamte Lenkereinheit 1 schwenkbar um eine Schwenkachse S am Rahmen eines Nutzfahrzeuges (nicht gezeigt) festlegbar ist. An ihrem, dem Lagerabschnitt 23 gegenüberliegenden, distalen Ende weist die Führungseinheit 2 einen ersten Befestigungsabschnitt 22 auf, wobei an diesem Befestigungsabschnitt 22 ein zweiter Befestigungsabschnitt 42 der Trägereinheit 4 festlegbar oder festgelegt ist. Vorzugsweise geschieht die Festlegung der Trägereinheit 4 an der Führungseinheit 2 mittels eines Schweißverfahrens, wobei insbesondere bevorzugt ein thermisches Schweißverfahren oder ein Reibschweißverfahren zum Einsatz gelangen kann. Weiterhin weist die Führungseinheit 2 einen Achsbefestigungsabschnitt 28 auf, welcher insbesondere bevorzugt der Aufnahme eines Achsrohres oder eines Achsstummels eines Nutzfahrzeugfahrwerkes dient. Die Trägereinheit 4 ist in der vorliegenden Ausführungsform vorzugsweise eine linke Trägereinheit 4L, wobei diese dadurch gekennzeichnet ist, dass der, vom zweiten Befestigungsabschnitt 42 aus gesehen, links der zweiten Ebene E₂ (in der Figur oben) befindliche Teil der Befestigungsfläche 46 größer ist als der, vom zweiten Befestigungsabschnitt 42 aus rechts der zweiten Ebene E₂ befindliche Teil der Befestigungsfläche 46. Die zweite Ebene E₂ liegt in der Trägereinheit 4 vorzugsweise quer oder besonders bevorzugt senkrecht zur Befestigungsfläche 46 und schneidet den zweiten Befestigungsabschnitt 42 vorzugsweise mittig. Dabei meint "mittig" im zweiten Befestigungsabschnitt 42 vorzugsweise den halben Wert der mittleren Erstreckung des zweiten Befestigungsabschnitts 42 orthogonal zur zweiten Ebene E₂. In der Figur ist der bevorzugte montierte Zustand der Lenkereinheit gezeigt, d. h. der Zustand, in welchem die Trägereinheit 4 an der Führungseinheit 2 festgelegt ist, wobei die erste Ebene E₁ parallel zur zweiten Ebene E₂ ausgerichtet ist. Die Trägereinheit 4 weist weiterhin bevorzugt drei Befestigungsmittel 47 auf, welche wie in der Figur dargestellt, als Befestigungsmittel 47a, Befestigungsmittel 47b und Befestigungsmittel 47c gekennzeichnet sind. In der Figur ist weiterhin das vorteilhafte Merkmal der Trägereinheit 4 gezeigt, dass die Befestigungsmittel 47 jeweils einen verschiedenen Abstand von der zweiten Ebene E₂ aufweisen, wobei der Abstand des Befestigungsmittels 47a von der zweiten Ebene E₂ gleich dem Abstand der ersten Ebenen E₁ zur zweiten Ebene E₂ ist. Wird also eine Federeinheit 8 (nicht gezeigt) an dem Befestigungsmittel 47a verschraubt und somit vorzugsweise mittig um das Befestigungsmittel 47a angeordnet, treten bei Belastung der Federeinheit 8 und bei einer Kraftübertragung senkrecht zur Befestigungsfläche 46 auf die Trägereinheit 4 keine Torsionsmomente um eine in der ersten Ebene E₁ liegenden Drehachse auf. Mit Vorteil findet somit keine Torsion der Führungseinheit 2 sowie des ersten Befestigungsabschnitts 22 und des zweiten Befestigungsabschnitts 42 statt. Dadurch kann vorzugsweise die Führungseinheit 2 weniger stark, bzw. leichter dimensioniert werden wodurch Gewicht gespart wird. Weiterhin treten in der schwenkbaren Lagerung der Lenkereinheit 1 im Lagerabschnitt 23 keine nachteiligen Biegemomente bzw. Torsionsmomente auf und deren Lebensdauer kann erhöht werden. Es versteht sich, dass durch die asymmetrische Ausbildung der Trägereinheit 4 bezogen auf die zweite Ebene E₂ verglichen mit dem Stand der Technik (siehe Fig. 1) die Gesamtbreite des Tragbereiches 44 bzw. der Befestigungsfläche 46 deutlich reduziert werden kann, wodurch insbesondere bevorzugt der Bauraumbedarf der Lenkereinheit 1 sinkt. Durch die Möglichkeit eine linke oder eine rechte Trägereinheit 4R oder 4L bzw. eine verdrehte Anordnung der ebenensymmetrisch ausgebildeten Trägereinheit 4 vorzusehen, bleibt trotz der geringeren Breite der Befestigungsfläche 46 die gleiche Anzahl an Befestigungsmöglichkeiten erhalten wie bei der aus dem Stand der Technik bekannten Lenkereinheit 1 (siehe Fig. 1). Mit Vorteil ist am ersten Befestigungsabschnitt 22 sowie am zweiten Befestigungsabschnitt 42 je eine Positionierhilfe 29, 49 vorgesehen, welche vorzugsweise als Rücksprung oder Vorsprung ausgebildet ist. Die Positionierhilfen 29, 49 dienen dabei der erleichterten Ausrichtung des zweiten Befestigungsabschnitts 42 am ersten Befestigungsabschnitt 42. In der gezeigten Ausführungsform sind am ersten Befestigungsabschnitt 22 zwei als Vorsprung ausgebildete Positionierhilfen 29 und am zweiten Befestigungsabschnitt 42 zwei als Rücksprung ausgebildete Positionierhilfen 49 vorgesehen. Die Positionierhilfen 29, 49 erstrecken sich vorzugsweise längs der Senkrechten zur Bildebene der Figur und können somit als schienenartige Führung eine bestimmte Lage der Trägereinheit 4 relativ zur Führungseinheit 2 längs einer Senkrechten zur ersten und/oder zweiten Ebene E₁, E₂ vorgeben. Gleichzeitig kann die vertikale Befestigungsposition der Trägereinheit 4 an der Führungseinheit 2 (siehe Fig. 3, 4 und 7) entlang mit einer Verschiebung entlang der Positionierhilfen 29, 49 vom Monteur der Lenkereinheit 1 ausgewählt werden.

Fig. 2b zeigt eine Draufsicht einer weiteren bevorzugten Ausführungsform, wobei im Unterschied zu der in Fig. 2 a gezeigten Lenkereinheit 1, die in Fig. 2 a gezeigten Lenkereinheit nun eine rechte Trägereinheit 4R aufweist. Die in Fig. 2b gezeigte Führungseinheit 2 entspricht dabei der in Fig. 2a gezeigten Führungseinheit 2. Deutlich erkennbar ist, dass die in Fig. 2b gezeigte rechte Trägereinheit 4R ebenensymmetrisch zu der in Fig. 2a gezeigten linken Trägereinheit 4L ausgebildet ist, wobei durch die in Fig. 2b gezeigte Anordnung der rechten Trägereinheit 4R an der Führungseinheit 2 drei weitere Befestigungspositionen einer Federeinheit 8 (nicht gezeigt) an der Lenkereinheit 1 möglich sind, welche sich von den in Fig. 2a möglichen Befestigungspositionen unterscheiden. Besonders bevorzugt ist es, dass der Abstand der Ebene E₂ zur Ebene E₁ in beiden Ausführungsformen, d. h. in der in Fig. 2a und der in Fig. 2b gezeigten Ausführungsform, gleich ist, wobei auch der Abstand der jeweiligen Befestigungsmittel 47a, 47b, 47c von der zweiten Ebene jeweils gleich dem Abstand der in der jeweils anderen gezeigten Ausführungsform ist.

Fig. 3 zeigt eine bevorzugte Ausführungsform des erfindungsgemäßen Fahrwerkssystems, wobei ein Rahmen 6 des Fahrwerks einen Lagerbock aufweist, an welchem die Führungseinheit 2 der Lenkereinheit 1 schwenkbar um eine Schwenkachse S lagerbar ist bzw. gelagert ist. Der erste Befestigungsabschnitt 22 erstreckt sich dabei, wie in der Figur gezeigt, tangential zu einer um die Schwenkachse S verlaufende Kreisbahn, wobei der erste Befestigungsabschnitt 22 vorzugsweise als im Wesentlichen ebene Fläche ausgebildet ist. Vorzugsweise ist der zweite Befestigungsabschnitt 42 der Trägereinheit 4 kleiner ausgebildet, als der erste Befestigungsabschnitt 22 und kann vorzugsweise in verschiedenen Höhen relativ zum Rahmen 6 am ersten Befestigungsabschnitt 22 festgelegt werden. Darüber hinaus weist das Fahrwerkssystem vorzugsweise eine Federeinheit 8 auf, welche auf der Befestigungsfläche 46 über ein Befestigungsmittel 47 an der Trägereinheit 4 festgelegt ist. Vorzugsweise zwischen dem ersten Befestigungsabschnitt 22 und dem nicht gezeigten Lagerbereich 23 weist die Führungseinheit einen Achsbefestigungsabschnitt 28 auf. Die Federeinheit 8 ist bevorzugt die Luftfeder eines Nutzfahrzeuges. Alternativ bevorzugt kann die Federeinheit 8 auch als Schrauben- oder Spiralfeder ausgebildet sein.

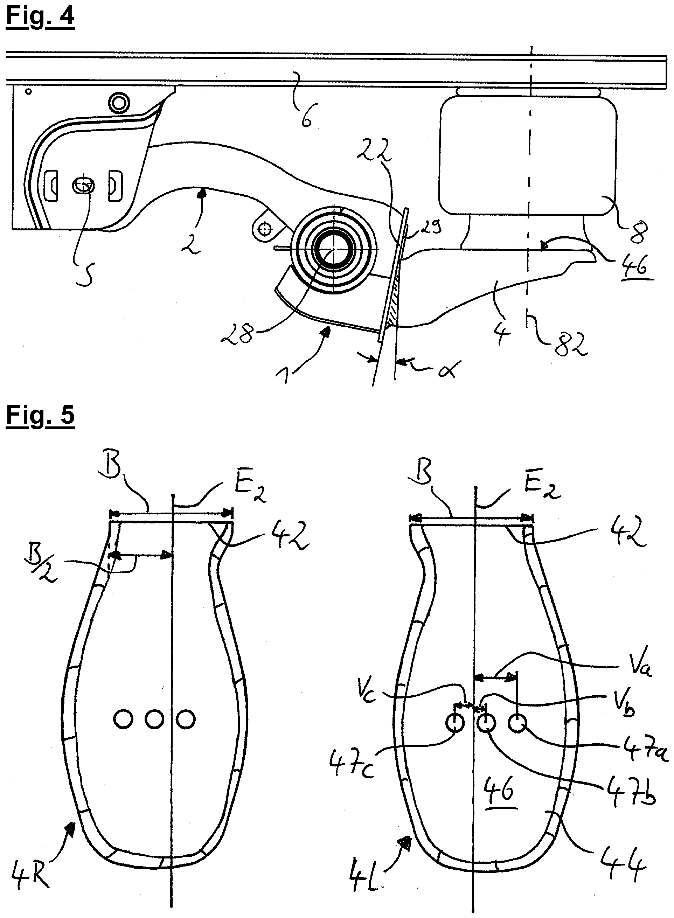

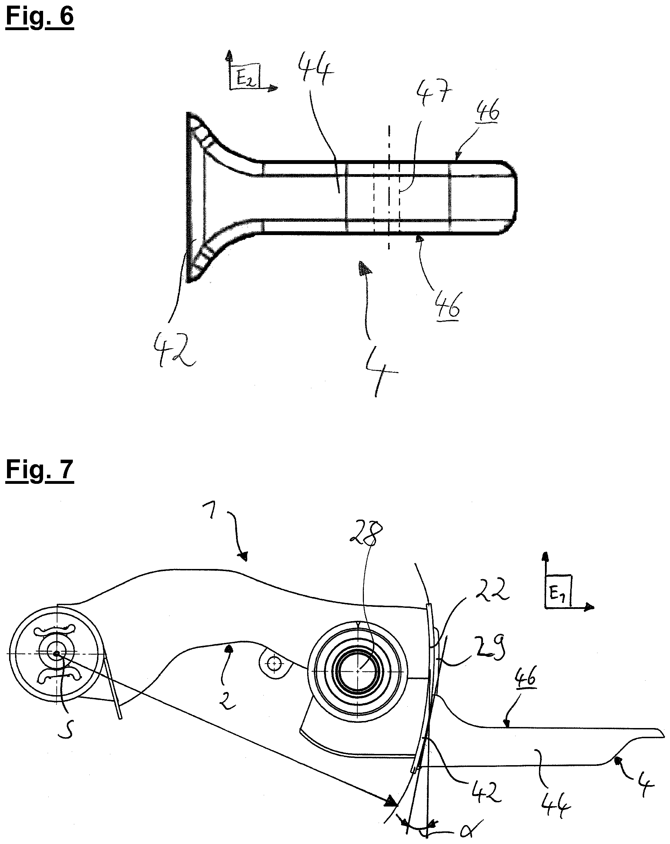

Fig. 4 zeigt eine weitere Seitenansicht einer bevorzugten Ausführungsform des erfindungsgemäßen Fahrwerkssystems, wobei die hier gezeigte Lenkereinheit 1 sich von der in Fig. 3 gezeigten Lenkereinheit 1 nur dadurch unterscheidet, dass die Trägereinheit 4 um einen Winkel α verdreht bzw. verschwenkt zur Führungseinheit 2 an dieser festlegt ist. Durch diese bevorzugte Ausführungsform ist es möglich, dass der Achsbefestigungsabschnitt 28 bei der in Fig. 4 gezeigten Ausführungsform, einen größeren Abstand zum Rahmen 6 des Fahrzeuges aufweist, als der in Fig. 3 gezeigte Achsbefestigungsabschnitt, wobei die Befestigungsfläche 46 trotzdem noch horizontal bzw. im Wesentlichen parallel zur Unterkante des Rahmens 6 ausgerichtet ist. Der Winkelversatz α kann dabei vorzugsweise durch Einbringen einer dreieckigen bzw. einer keilförmigen Schweißnaht bzw. einzelner keilförmiger Bauteile erreicht werden oder durch eine gekrümmte Ausführung des ersten Befestigungsabschnitts 22 (siehe Fig. 7). Dank dieser bevorzugten Ausführungsform kann vermieden werden, dass die Federeinheit 8 bei der in Fig. 3 und Fig. 4 gezeigten Normalfahrzeughöhe, d. h. Neutrallage der Lenkereinheit 1 relativ zum Rahmen 6, schräg belastet wird. Mit anderen Worten steht die Federlängsachse 82, während das Nutzfahrzeug mit einer bestimmten Standardnutzlast beladen ist, vorzugsweise senkrecht auf der Befestigungsfläche 46 und insbesondere bevorzugt auch senkrecht zu der Befestigungsfläche der Federeinheit an der Unterkante des Rahmens 6. Durch die Vermeidung einer ungleichen bzw. schrägen Belastung der Federeinheit 8, kann deren Lebensdauer erhöht werden.

Fig. 5 zeigt eine Draufsicht zweier Trägereinheiten 4, wobei die in Figur links gezeigte Trägereinheit als rechte Trägereinheit 4R ausgebildet ist und die in der Figur rechts gezeigte Trägereinheit eine linke Trägereinheit 4L ist. Vorzugsweise sind die Trägereinheiten 4R und 4L spiegelsymmetrisch zueinander ausgeführt, wobei die Symmetrieachse insbesondere bevorzugt parallel zu den zweiten Ebenen E₂ beider Trägereinheiten 4R, 4L liegt. Weiterhin bevorzugt weisen die Trägereinheiten 4R und 4L drei Befestigungsmittel 47 auf, wobei ein erstes Befestigungsmittel 47 a einen Versatz bzw. einen Abstand Vₐ zur zweiten Ebene aufweist, ein zweites Befestigungsmittel 47 b einen Versatz V_{b} und ein drittes Befestigungsmittel einen, bezogen auf die anderen Befestigungsmittel 47 a, 47 b negativen Versatz V_{c} zur zweiten Ebene aufweist. Vorteilhaft ist es, wenn der Versatz Vₐ zumindest doppelt so groß ist wie der Versatz V_{b} und oder der Versatz V_{c}, da auf diese weise ein breites Spektrum an Befestigungsmöglichkeiten für Federeinheiten 8 erreicht wird. Vorzugsweise sind die benachbarten Befestigungsmittel 47 jeweils um 5mm - 100mm, besonders bevorzugt um 10mm - 50mm und insbesondere bevorzugt ca. 20mm voneinander beabstandet, um mit Vorteil Standardkonfigurationen für auf dem Markt befindliche Nutzfahrzeuge bereitstellen zu können. Alternativ kann auch eine Beabstandung der Befestigungsmittel 47 mit 30mm eingesetzt werden, um eine besonders übliche Standardkonfiguration von Nutzfahrzeugen bedienen zu können. Die zweite Ebene E₂ ist vorzugsweise mittig, bezogen auf die Breite B des zweiten Befestigungsabschnitts 42 angeordnet. Weiterhin bevorzugt liegt die zweite Ebene E₂ orthogonal zur Breite B des zweiten Befestigungsabschnitts 42. Die Trägereinheiten 4R und 4L sind erfindungsgemäß asymmetrisch um die zweite Ebene ausgebildet.

Fig. 6 zeigt eine Seitenansicht einer bevorzugten Ausführungsform einer erfindungsgemäßen Trägereinheit 4, wobei die Trägereinheit 4 vorzugsweise ebenensymmetrisch zu einer zwischen den zwei Befestigungsflächen 46 liegenden Ebene ausgebildet ist. Es versteht sich, dass diese erfindungsgemäße Trägereinheit 4 jeweils in, um 180° verdrehter Position relativ zur Führungseinheit 2 (nicht gezeigt) an dieser festgelegt werden kann. Die ebenensymmetrisch ausgebildete Trägereinheit 4, wie gezeigt in Fig. 6, ist asymmetrisch zur Ebene E₂, welche vorzugsweise senkrecht zu den Befestigungsflächen 46 angeordnet ist, ausgebildet. Zwischen dem Tragabschnitt 44 und dem zweiten Befestigungsabschnitt 42 der Trägereinheit 4 ist vorzugsweise eine gerundete Geometrie vorgesehen, welche zum einen eine bessere Kraft- und Momentenübertragung zwischen dem zweiten Befestigungsabschnitt 42 und dem Tragabschnitt 44 gewährleistet und zum anderen eine Beschädigung des Luftfederbalges einer Federeinheit 8 (nicht gezeigt) vermeidet, wenn dieser im vollständig eingefahrenen Zustand der Federeinheit 8 mit den entsprechenden Flächen der Trägereinheit 4 in Berührung kommt. Mit anderen Worten wird bevorzugt an der Trägereinheit 4 auf scharfkantige Flächen bzw. Kanten verzichtet, um eine Beschädigung des Luftfederbalges zu verringern und um Kerbwirkung an den Kanten der Trägereinheit zu vermindern.

Fig. 7 zeigt eine Seitenansicht einer bevorzugten Ausführungsform einer erfindungsgemäßen Lenkereinheit 1, wobei die Führungseinheit 2 einen ersten Befestigungsabschnitt 22 aufweist, welcher im Wesentlichen gekrümmt ausgebildet ist. Die Krümmung des ersten Befestigungsabschnitts 22 verläuft dabei, in der Seitenansicht gesehen, konzentrisch um die Schwenkachse S der Führungseinheit 2. Die Trägereinheit 4 kann vorzugsweise in verschiedenen Höhen, an der Führungseinheit 2 angeordnet werden, wobei nicht nur eine gewünschte Höhe der Befestigungsfläche 46 relativ zur Führungseinheit 2, insbesondere zum Achsbefestigungsabschnitt 28, eingestellt werden kann, sondern gleichzeitig auch der Winkelversatz α derart angepasst wird, dass die Befestigungsfläche 46 in jeder möglichen Einbaulage im Normalbelastungszustand der Lenkereinheit 1 in einer horizontalen Ebene, bzw. parallel zur Unterkante des Fahrzeugrahmens 6 (nicht gezeigt), gelegen ist. Durch diese bevorzugte Ausführungsform kann die Höhe des Achsbefestigungsabschnitts 28 relativ zum Tragbereich 44 und insbesondere zur Befestigungsfläche 46 der Trägereinheit 4 verändert werden, bei gleichzeitiger Gewährleistung der parallelen Ausrichtung der Befestigungsfläche 46 zum Rahmen 6 des Nutzfahrzeugs (nicht gezeigt).

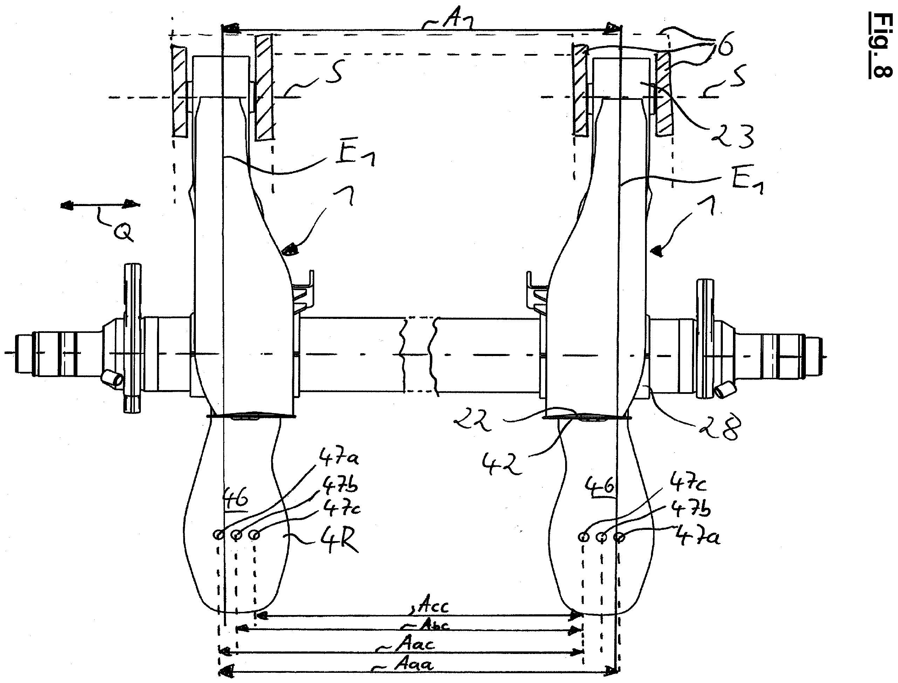

Fig. 8 zeigt eine Draufsicht eines erfindungsgemäßen Fahrwerkssystems, welches zwei Lenkereinheiten 1 aufweist, welche jeweils schwenkbar um eine Schwenkachse S am Rahmen 6 des Nutzfahrzeuges (gestrichelt, sowie im Bereich der Lagerböcke geschnitten dargestellt) festgelegt sind. Die in der Figur links gezeigte Lenkereinheit 1 weist dabei eine als rechte Trägereinheit 4R ausgebildete Trägereinheit 4 auf, und die in der Figur rechts gezeigte Lenkereinheit 1 weist eine als linke Trägereinheit 4L ausgebildete Trägereinheit 4 auf. Alternativ zu dieser Ausführungsform könnten die Trägereinheiten 4 auch als ebenensymmetrisch ausgebildete Trägereinheiten 4, wie gezeigt ein Fig. 6, ausgebildet sein, wobei die linke Trägereinheit 4 im Vergleich zur rechten Trägereinheit um 180° verdreht angeordnet wäre. Beide Trägereinheiten 4 bzw. 4R und 4L, weisen jeweils drei Befestigungsmittel 47 a, 47 b und 47 c auf, wobei die Befestigungsmittel 47 a, 47 b, 47 c der auf der linken Seite gezeigten Trägereinheit jeweils einen Abstand A zu dem korrespondierenden Befestigungsmittel 47 der auf der rechten Seite gezeigten Trägereinheit aufweisen. Die Bezeichnung des Abstands A der Befestigungsmittel voneinander ist dabei sinngemäß entsprechend der Befestigungsmittel, zwischen welchen der Abstand gemessen wird, bezeichnet. Somit versteht sich, dass der Abstand A_{cc} der Abstand zwischen zwei Befestigungsmitteln 47c ist, der Abstand A_{bc} der Abstand zwischen einem Befestigungsmittel 47b und einem zweiten Befestigungsmittel 47c ist, oder beispielsweise der Abstand Aₐₐ der Abstand zwischen zwei Befestigungsmitteln 47a ist. Als Referenzgröße des Rahmens 6 des Nutzfahrzeuges ist vorzugsweise der Abstand A₁ der ersten Ebenen E₁ voneinander zu sehen, wobei dieser vorzugsweise durch den Abstand der beiden Lagerböcke des Rahmens 6 des Nutzfahrzeuges voneinander definiert ist. Vorzugsweise ist der Rahmen 6 des Nutzfahrzeuges im Wesentlichen symmetrisch um eine zwischen den ersten Ebenen E₁ gelegene Ebene ausgebildet, wobei in der Folge vorzugsweise nur ein Paar von Befestigungsmitteln 47 a oder 47 b oder 47 c an den jeweiligen Lenkereinheiten 1 zur Festlegung einer Federeinheit 8 verwendet wird. Somit ergeben sich bei der in Fig. 8 gezeigten Ausführungsform drei mögliche Befestigungspositionen einer Federeinheit 8 an der Lenkereinheit 1 bezogen auf den Rahmen 6 des Nutzfahrzeuges, ausgedrückt durch die Referenzgeometrie der ersten Ebene E₁.

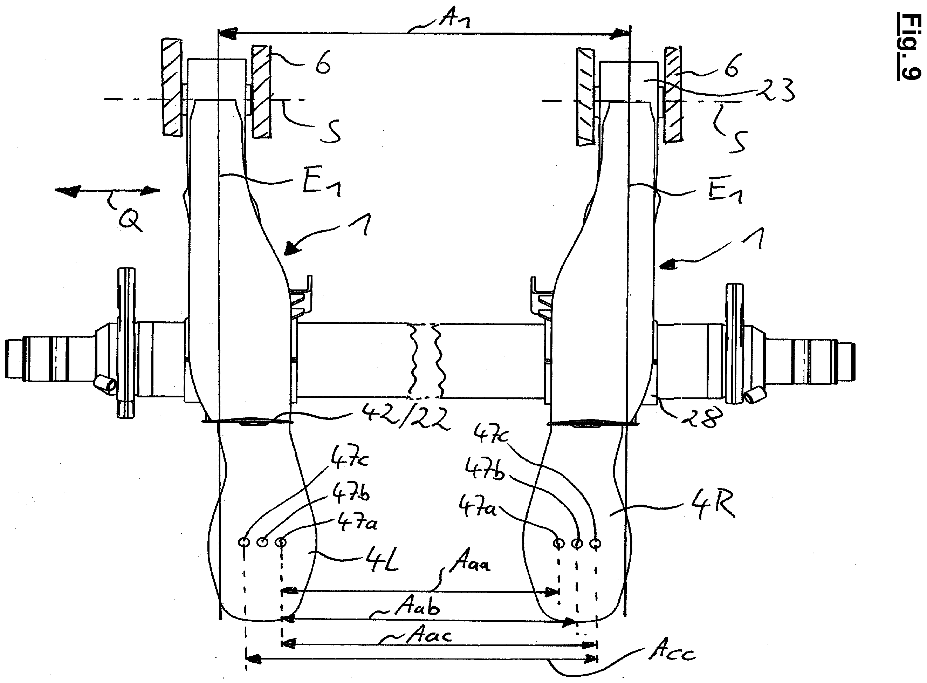

Fig. 9 zeigt eine weitere Draufsicht einer bevorzugten Ausführungsform eines erfindungsgemäßen Fahrwerkssystems, wobei im Unterschied zu Fig. 8 nun die linke und die rechte Trägereinheit 4R und 4L miteinander vertauscht wurden, wodurch sich weitere Befestigungsmöglichkeiten bzw. Befestigungspositionen einer Federeinheit 8 an der jeweiligen Lenkereinheit 1 des Fahrwerkssystems ergeben. Alternativ bevorzugt könnte auch sein, dass die in Fig. 8 gezeigten ebenensymmetrisch ausgebildeten Trägereinheiten 4 jeweils um 180° verdreht wurden, wodurch sich analog zur Vertauschung der linken und rechten Trägereinheit 4R und 4L weitere Befestigungsmöglichkeiten ergeben. Es versteht sich, dass durch Erhöhung der Anzahl an Befestigungsmitteln 47a, 47b, 47c, ... an den Trägereinheiten 4 auch die Zahl möglicher Befestigungspositionen erhöht werden kann, wobei sich bei Hinzufügen eines weiteren Befestigungsmittels 47 durch Vertauschen oder Verdrehen der Trägereinheiten 4, 4R, 4L jeweils zwei weitere Befestigungspositionen für eine Federeinheit 8 an der Lenkereinheit 1 ergeben. Vorzugsweise steht bei den in Fig. 8 und 9 gezeigten Ausführungsformen der Versatz Vₐ, V_{b} oder V_{c} eines der Befestigungsmittel 47a, 47b oder 47c in einem Verhältnis von 0,005 - 0,2, bevorzugt 0,01 - 0,1 und besonders bevorzugt von 0,015 bis 0,08 zum Abstand A_{aa...cc} des jeweiligen Befestigungsmittels 47a, 47b oder 47c von einem anderen Befestigungsmittel 47a, 47b oder 47c.

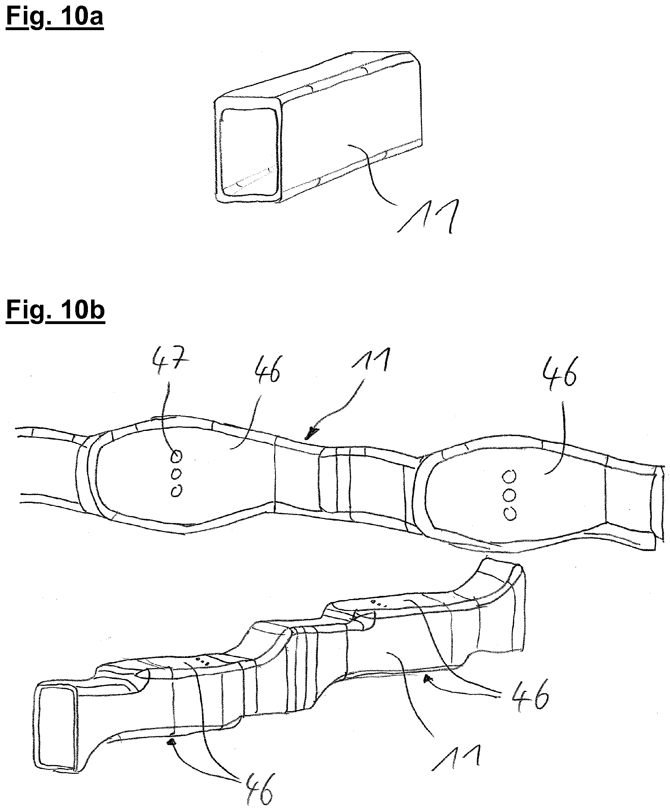

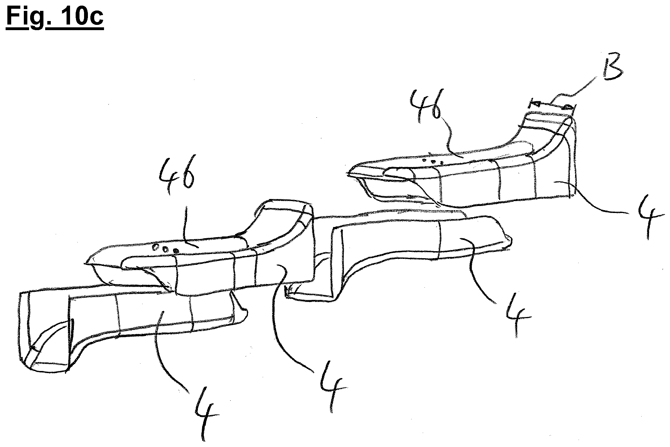

Fig. 10a, Fig. 10b und Fig. 10c zeigen die Verfahrensschritte eines Herstellungsverfahrens einer Trägereinheit 4. Dabei werden aus einem rohr- oder bevorzugt zylinderförmigen Grundkörper 11, wie gezeigt in Fig. 10a, zumindest zwei Trägereinheiten 4, wie gezeigt in Fig. 10c hergestellt. Die Trägereinheiten 4 weisen vorzugsweise, abgesehen davon, dass die jeweils zu einer oder zwei Seiten hin offen sind, die Merkmale der zuvor beschriebenen Trägereinheiten 4 (siehe Fig. 1 - 9) auf. Mittels des erfindungsgemäßen Herstellungsverfahrens wird der Grundkörper 11 aus Fig. 10a zunächst durch Umformen, vorzugsweise Innenhochdruckumformen, in die in Fig. 10b gezeigte Form gebracht. Dabei werden an dem Grundkörper 11 wesentliche Außengeometrien einer Trägereinheit 4, wie eine Befestigungsfläche 46 und vorzugsweise gerundete Kanten und Befestigungsmittel 47, geformt. In einem zweiten Herstellungsschritt des erfindungsgemäßen Verfahrens wird der derart verformte Grundkörper 11 in zumindest zwei Trägereinheiten 4 zerteilt. Vorzugsweise können, wie in Fig. 10c gezeigt, aus einem Grundkörper 11 vier Trägereinheiten 4 erzeugt werden. Es versteht sich, dass die Anzahl der aus einem Grundkörper 11 erzeugbaren Trägereinheiten 4 auch höher sein kann, wobei die technische Obergrenze dieser Anzahl durch die technisch handhabbare maximale Größe des unzerteilten Grundkörpers 11 gegeben ist. Für die Zerteilung des Grundkörpers 11 wird vorzugsweise ein automatisiertes Trennverfahren, wie Laserstrahlschneiden, Wasserstrahlschneiden oder Drahtschneiden, eingesetzt. Dank des somit bereitgestellten Fertigungsverfahrens können die Herstellungskosten für Lenkereinheiten 1 weiter reduziert werden, da nicht nur ein modularer Aufbau der Lenkereinheit 1 eine größere Vereinheitlichung der herzustellenden Einzelteile realisiert, sondern auch die herzustellenden Trägereinheiten 4 einfach und mit wenigen Verfahrensschritten kostengünstig produziert werden können.

### Bezugszeichen:

1 - Lenkereinheit
2 - Führungseinheit
4 - Trägereinheit
4L - linke Trägereinheit
4R - rechte Trägereinheit
6 - Rahmen
8 - Federeinheit
11 - Grundkörper
22 - erster Befestigungsabschnitt
23 - Lagerabschnitt
28 - Achsbefestigungsabschnitt
29 - Positionierhilfe
42 - zweiter Befestigungsabschnitt
44 - Tragbereich
46 - Befestigungsfläche
47 - Befestigungsmittel
47a, 47b, 47c - erstes, zweites, drittes Befestigungsmittel
49 - Positionierhilfe
82 - Federlängsachse
α - Winkelversatz
A₁ - Abstand der ersten Ebenen
Aₐₐ, A_{ab}, A_{ac} .. A_{cc} - Abstand der Befestigungsmittel
B - Breite zweiter Befestigungsabschnitt
E₁ - erste Ebene
E₂ - zweite Ebene
S - Schwenkachse
Q - Querrichtung des Rahmens
V, Vₐ, V_{b}, V_{c} - orthogonaler Versatz

## Patentansprüche

1. Lenkereinheit (1), insbesondere für Nutzfahrzeuge, umfassend eine Führungseinheit (2) und eine Trägereinheit (4),
wobei die Trägereinheit (4) einen zweiten Befestigungsabschnitt (42) zur Festlegung an einem ersten Befestigungsabschnitt (22) der Führungseinheit (2) und einen Tragabschnitt (44) zur Aufnahme einer Federeinheit (8) aufweist,
wobei eine zweite Ebene (E₂) orthogonal zu einer Breite (B) des zweiten Befestigungsabschnitts (42) der Trägereinheit (4) ausgerichtet ist,
wobei der Tragabschnitt (44) asymmetrisch zur zweiten Ebene (E₂) ausgebildet ist,
wobei sich die Führungseinheit (2) überwiegend längs einer ersten Ebene (E₁) erstreckt,
wobei in einem montierten Zustand, in dem die Trägereinheit (4) im zweiten Befestigungsabschnitt (42) am ersten Befestigungsabschnitt (22) festgelegt ist, die erste Ebene (E₁) parallel zur zweiten Ebene (E₂) ausgerichtet ist,
wobei die erste Ebene (E₁) orthogonal zu einer Schwenkachse (S) der schwenkbaren Lagerung der Führungseinheit (2) in einem Lagerabschnitt (23) ausgerichtet ist,
wobei die erste Ebene (E₁) mittig durch den Lagerabschnitt (23) der Führungseinheit (2) verläuft, und
wobei die zweite Ebene (E₂) mittig und quer zum zweiten Befestigungsabschnitt (42) der Trägereinheit (8) liegt
**dadurch gekennzeichnet, dass** im montierten Zustand ein Befestigungsmittel (47) zur Festlegung der Federeinheit (8) am Tragabschnitt (44) der Trägereinheit (4) einen Abstand von der zweiten Ebene (E₂) aufweist, der gleich dem Abstand der zweiten Ebene (E₂) von der ersten Ebene (E₁) ist.

2. Lenkereinheit (1) nach Anspruch 1,
wobei zumindest ein Befestigungsmittel (47) am Tragabschnitt (44) vorgesehen ist, welches einen orthogonalen Versatz (V) zur zweiten Ebene (E₂) aufweist.

3. Lenkereinheit (1) nach Anspruch 2,
wobei zumindest zwei Befestigungsmittel (47a, 47b) am Tragabschnitt (44) vorgesehen sind, welche jeweils einen orthogonalen Versatz (Vₐ, V_{b}) zur zweiten Ebene (E₂) aufweisen,
wobei sich der Versatz (Vₐ) des ersten Befestigungsmittels (47a) vom Versatz (V_{b}) des zweiten Befestigungsmittels (47b) unterscheidet.

4. Lenkereinheit (1) nach einem der vorhergehenden Ansprüche,
wobei die Führungseinheit (2) an ihrem, dem ersten Befestigungsabschnitt (22) gegenüberliegenden, distalen Ende einen Lagerabschnitt (23) zur schwenkbaren Lagerung an einem Rahmen (6) aufweist,
wobei die Schwenkachse (S) der schwenkbaren Lagerung vorzugsweise orthogonal zur ersten Ebene (E₁) liegt, und
wobei sich der erste Befestigungsabschnitt (22) vorzugsweise tangential zu einer um die Schwenkachse (S) verlaufenden Kreisbahn erstreckt.

5. Lenkereinheit (1) nach einem der vorhergehenden Ansprüche,
wobei der Tragabschnitt (44) wenigstens ein Befestigungsmittel (47) aufweist, welches im montierten Zustand der Lenkereinheit (1) von der ersten Ebene (E₁) beabstandet ist.

6. Lenkereinheit (1) nach einem der vorhergehenden Ansprüche,
wobei die Trägereinheit (4) als linke Trägereinheit (4L) oder als rechte Trägereinheit (4R) ausgebildet ist.

7. Lenkereinheit (1) nach einem der vorhergehenden Ansprüche,
wobei die Trägereinheit (4) zwei gegenüberliegende Befestigungsflächen (46) aufweist,
wobei der Tragabschnitt (44) ebenensymmetrisch zu einer zwischen den Befestigungsflächen (46) liegenden Ebene ausgebildet ist.

8. Fahrwerkssystem für Nutzfahrzeuge,
umfassend einen Rahmen (6) und zwei am Rahmen (6) schwenkbar festlegbare Lenkereinheiten (1) nach einem der Ansprüche 1 - 7,
wobei der Rahmen (6) eine Querrichtung (Q) aufweist,
wobei jede Lenkereinheit (1) eine Trägereinheit (4) mit zumindest einem Befestigungsmittel (47) aufweist,
wobei durch Verdrehen der Befestigungslage einer Trägereinheit (4) an der jeweiligen Führungseinheit (2) und/oder durch Vertauschen der Trägereinheiten (4) miteinander zumindest ein Befestigungsmittel (47) in eine parallel zur Querrichtung (Q) verlagerte Position bringbar ist.

9. Fahrwerkssystem nach Anspruch 8,
aufweisend zwei Lenkereinheiten (1) nach Anspruch 7,
wobei an einer der beiden Führungseinheiten (2) eine linke Trägereinheit (4L) oder eine rechte Trägereinheit (4R) festlegbar ist und an der jeweils anderen Führungseinheit (2) eine rechte Trägereinheit (4R) oder eine linke Trägereinheit (4L) festlegbar ist,
wobei bezogen auf eine mittig zwischen den beiden ersten Ebenen (E₁) liegende Ebene, verschiedene Befestigungspositionen Federeinheiten (8) an den Trägereinheiten (4R, 4L) vorgesehen sind.

10. Fahrwerkssystem nach Anspruch 9,
wobei an einer der beiden Führungseinheiten (2) die linke Trägereinheit (4L) und an der jeweils anderen Führungseinheit (2) die rechte Trägereinheit (4R) oder eine linke Trägereinheit (4L) festlegbar ist,
wobei das Befestigungsmittel (47) der linken Trägereinheit (4L) einen ersten Abstand (Aₐₐ .. A_{cc}) vom Befestigungsmittel (47) der rechten Trägereinheit (4R) aufweist.

11. Fahrwerkssystem nach Anspruch 10,
wobei bei vertauschter Anordnung der Trägereinheiten (4L, 4R) der Abstand (Aₐₐ .. A_{cc}) der Befestigungsmittel (47) voneinander einen anderen Wert annimmt.

12. Fahrwerkssystem nach Anspruch 8,
aufweisend zwei Lenkereinheiten (1) nach Anspruch 7,
wobei die Trägereinheiten (4) jeweils in einer von zwei Befestigungslagen an der jeweiligen Führungseinheit (2) festlegbar sind, derart dass die Befestigungsmittel (47) der Trägereinheiten (4) einen von zwei möglichen Abständen (Aₐₐ) voneinander aufweisen.

13. Fahrwerkssystem nach einem der Ansprüche 8 bis 12,
wobei die Trägereinheiten (4, 4L, 4R) jeweils drei Befestigungsmittel (47a, 47b, 47c) aufweisen,
wobei zumindest zwei Befestigungsmittel (47a, 47b) von der zweiten Ebene (E₂) beabstandet sind.

14. Verfahren zur Herstellung einer Trägereinheit (4) einer Lenkereinheit (1) nach einem der Ansprüche 1 - 7, umfassend die Schritte:
a) Bereitstellen eines rohrförmigen Grundkörpers (11),
b) Durchführen eines Umformverfahrens an dem Grundkörper (11),
wobei die Außengeometrie des Grundkörpers (11) derart verformt wird, dass zumindest zwei Befestigungsflächen (46) daran ausgebildet werden,
c) Anwenden eines Trennverfahrens auf den verformten Grundkörper (11),
wobei aus dem Grundkörper (11) zumindest zwei Trägereinheiten (4) hergestellt werden,
wobei jede Trägereinheit (4) einen zweiten Befestigungsabschnitt (42) und einen Tragabschnitt (44) aufweist, und
wobei eine zweite Ebene (E₂) mittig und quer zum zweiten Befestigungsabschnitt (42) der Trägereinheit (4) liegt,
**dadurch gekennzeichnet, dass** der Tragabschnitt (44) asymmetrisch zur zweiten Ebene (E₂) ausgebildet ist und ein von der zweiten Ebene (E₂) beabstandetes Befestigungsmittel (47) zur Festlegung einer Federeinheit (8) am Tragabschnitt (44) aufweist.

## Claims

1. A link unit (1), in particular for utility vehicles, comprising a guide unit (2) and a support unit (4),
wherein the support unit (4) has a second fastening section (42) for fixing to a first fastening section (22) of the guide unit (2) and has a load-bearing section (44) for accommodating a spring unit (8),
wherein a second plane (E₂) is oriented orthogonally with respect to a width (B) of the second fastening section (42) of the support unit (4),
wherein the load-bearing section (44) is of asymmetrical form with respect to the second plane (E₂).
wherein the guide unit (2) extends predominantly along a first plane (E₁),
wherein, in an assembled state, in which the support unit (4) is fixed by way of the second fastening section (42) to the first fastening section (22), the first plane (E₁) is oriented parallel to the second plane (E₂),
wherein the first plane (E₁) is oriented orthogonally with respect to a pivot axis (S) of the pivotable mounting of the guide unit (2) in a bearing section (23),
wherein the first plane (E₁) runs centrally through the bearing section (23) of the guide unit (2), and
wherein the second plane (E₂) lies centrally and orthogonally with respect to the second fastening section (42) of the support unit (8),
**characterized by**, that
in the assembled state a fastening means (47) for fixing the spring unit (8) at the load-bearing section (44) of the support unit (4) has a distance to the second plane (E₂), that is equal to the distance of the second plane (E₂) to the first plane (E₁).

2. The link unit (1) as claimed in claim 1,
wherein, on the load-bearing section (44), there is provided at least one fastening means (47) which has an orthogonal offset (V) with respect to the second plane (E₂).

3. The link unit (1) as claimed in claim 2,
wherein, on the load-bearing section (44), there are provided at least two fastening means (47a, 47b) which each have an orthogonal offset (Vₐ, V_{b}) with respect to the second plane (E₂),
wherein the offset (Vₐ) of the first fastening means (47a) differs from the offset (V_{b}) of the second fastening means (47b).

4. The link unit (1) as claimed in one of the preceding claims,
wherein the guide unit (2) has, at its distal end situated opposite the first fastening section (22), a bearing section (23) for pivotable mounting on a frame (6),
wherein the pivot axis (S) of the pivotable mounting lies preferably orthogonally with respect to the first plane (E₁), and
wherein the first fastening section (22) extends preferably tangentially with respect to a circular path running around the pivot axis (S).

5. The link unit (1) as claimed in one of the preceding claims,
wherein the load-bearing section (44) has at least one fastening means (47) which, in the assembled state of the link unit (1), is spaced apart from the first plane (E₁).

6. The link unit (1) as claimed in one of the preceding claims,
wherein the support unit (4) is formed as a left-hand support unit (4L) or as a right-hand support unit (4R).

7. The link unit (1) as claimed in one of the preceding claims,
wherein the support unit (4) has two opposite fastening surfaces (46), wherein the load-bearing section (44) is of plane-symmetrical form with respect to a plane lying between the fastening surfaces (46).

8. A chassis system for utility vehicles,
comprising a frame (6) and two link units (1) as claimed in one of claims 1 - 7 which can be pivotably fixed to the frame (6),
wherein the frame (6) has a transverse direction (Q),
wherein each link unit (1) has a support unit (4) with at least one fastening means (47),
wherein, by rotating the fastening position of a support unit (4) on the respective guide unit (2) and/or by interchanging the support units (4) for one another, at least one fastening means (47) can be placed into a location which is offset in parallel with respect to the transverse direction (Q).

9. The chassis system as claimed in claim 8,
having two link units (1) as claimed in claim 7,
wherein a left-hand support unit (4L) or a right-hand support unit (4R) can be fixed to one of the two guide units (2), and a right-hand support unit (4R) or a left-hand support unit (4L) can be fixed to the in each case other guide unit (2), wherein, in relation to a plane lying centrally between the two first planes (E₁), different fastening locations of spring units (8) on the support units (4R, 4L) are provided.

10. The chassis system as claimed in claim 9,
wherein the left-hand support unit (4L) can be fixed to one of the two guide units (2), and the right-hand support unit (4R) or a left-hand support unit (4L) can be fixed to the in each case other guide unit (2),
wherein the fastening means (47) of the left-hand support unit (4L) has a first spacing (Aₐₐ .. A_{cc}) to the fastening means (47) of the right-hand support unit (4R).

11. The chassis system as claimed in claim 10,
wherein, in the case of an interchanged arrangement of the support units (4L, 4R), the spacing (Aₐₐ .. A_{cc}) of the fastening means (47) to one another assumes a different value.

12. The chassis system as claimed in claim 8,
having two link units (1) as claimed in claim 7,
wherein the support units (4) can be fixed in each case in one of two fastening positions on the respective guide unit (2), in such a way that the fastening means (47) of the support units (4) have one of two possible spacings (Aₐₐ) to one another.

13. The chassis system as claimed in one of claims 8 to 12,
wherein the support units (4, 4L, 4R) have in each case three fastening means (47a, 47b, 47c),
wherein at least two fastening means (47a, 47b) are spaced apart from the second plane (E₂).

14. A method for producing a support unit (4) of a link unit (1) according to one of the claims 1 to 7, comprising the steps:
a) providing a tubular main body (11),
b) performing a deformation process on the main body (11),
wherein the outer geometry of the main body (11) is deformed such that at least two fastening surfaces (46) are formed thereon,
c) performing a cutting process on the deformed main body (11),
wherein at least two support units (4) are produced from the main body (11),
wherein each support unit (4) has a second fastening section (42) and a load-bearing section (44), and
wherein a second plane (E₂) lies centrally and orthogonally with respect to the second fastening section (42) of the support unit (4) **characterized by**, that the load-bearing section (44) is of asymmetrical form with respect to the second plane (E₂) and has a fastening means (47) that is spaced apart from to the second plane (E₂) for fixing of a spring unit (8) to the load-bearing section (44).

## Revendications

1. Ensemble formant bras oscillant (1), en particulier pour des véhicules utilitaires, comportant une unité de guidage (2) et une unité porteuse (4), dans lequel
l'unité porteuse (4) comprend une seconde portion de fixation (42) pour l'immobilisation sur une première portion de fixation (22) de l'unité de guidage (2) et comprend une portion de support (44) pour loger une unité formant ressort (8),
un second plan (E₂) est orienté orthogonalement à une largeur (B) de la seconde portion de fixation (42) de l'unité porteuse (4),
la portion de support (44) est réalisée de façon asymétrique au second plan (E₂),
l'unité de guidage (2) s'étend majoritairement le long d'un premier plan (E₁), dans un état monté dans lequel l'unité porteuse (4) est immobilisée dans la seconde portion de fixation (42) sur la première portion de fixation (22), le premier plan (E₁) est orienté parallèlement au second plan (E₂),
le premier plan (E₁) est orienté orthogonalement à un axe de pivotement (S) du montage pivotant de l'unité de guidage (2) dans une portion de montage (23),
le premier plan (E₁) s'étend au milieu à travers la portion de montage (23) de l'unité de guidage (2), et
le second plan (E₂) se trouve au milieu et transversalement à la seconde portion de fixation (42) de l'unité porteuse (8),
**caractérisé en ce que**
dans l'état monté, un moyen de fixation (47) pour immobiliser l'unité formant ressort (8) sur la portion de support (44) de l'unité porteuse (4) présente une distance par rapport au second plan (E₂) qui est égale à la distance du second plan (E₂) par rapport au premier plan (E₁).

2. Ensemble formant bras oscillant (1) selon la revendication 1,
dans lequel
au moins un moyen de fixation (47) est prévu sur la portion de support (44) qui présente un décalage orthogonal (V) par rapport au second plan (E₂).

3. Ensemble formant bras oscillant (1) selon la revendication 2,
dans lequel
au moins deux moyens de fixation (47a, 47b) sont prévus sur la portion de support (44) qui présentent chacun un décalage orthogonal (Vₐ, V_{b}) par rapport au second plan (E₂),
le décalage (Vₐ) du premier moyen de fixation (47a) diffère du décalage (V_{b}) du second moyen de fixation (47b).

4. Ensemble formant bras oscillant (1) selon l'une des revendications précédentes,
dans lequel
à son extrémité distale opposée à la première portion de fixation (22), l'unité de guidage (2) comprend une portion de montage (23) pour le montage pivotant sur un cadre (6),
l'axe de pivotement (S) du montage pivotant est de préférence orthogonal au premier plan (E₁), et
la première portion de fixation (22) s'étend de préférence tangentiellement à une trajectoire circulaire s'étendant autour de l'axe de pivotement (S).

5. Ensemble formant bras oscillant (1) selon l'une des revendications précédentes,
dans lequel
la portion de support (44) comprend au moins un moyen de fixation (47) qui, dans l'état monté de l'ensemble formant bras oscillant (1), est écarté du premier plan (E₁).

6. Ensemble formant bras oscillant (1) selon l'une des revendications précédentes,
dans lequel
l'unité porteuse (4) est réalisée sous la forme d'une unité porteuse de gauche (4L) ou sous la forme d'une unité porteuse de droite (4R).

7. Ensemble formant bras oscillant (1) selon l'une des revendications précédentes,
dans lequel
l'unité porteuse (4) comprend deux surfaces de fixation opposées (46),
la portion de support (44) est réalisée à symétrie plane par rapport à un plan situé entre les surfaces de fixation (46).

8. Système de train de roulement pour véhicules utilitaires,
comportant un cadre (6) et deux ensembles formant bras oscillant (1) selon l'une des revendications 1 à 7 susceptibles d'être immobilisés avec faculté de pivotement sur le cadre (6),
dans lequel
le cadre (6) présente une direction transversale (Q),
chaque ensemble formant bras oscillant (1) comprend une unité porteuse (4) pourvue d'au moins un moyen de fixation (47),
par rotation de la position de fixation d'une unité porteuse (4) sur l'unité de guidage respective (2) et/ou par échange des unités porteuses (4) l'une contre l'autre, au moins un moyen de fixation (47) peut être amené dans une position déplacée parallèlement à la direction transversale (Q).

9. Système de train de roulement selon la revendication 8,
comportant deux ensembles formant bras oscillant (1) selon la revendication 7,
dans lequel
une unité porteuse de gauche (4L) ou une unité porteuse de droite (4R) est immobilisable sur l'une des deux unités de guidage (2), et une unité porteuse de droite (4R) ou une unité porteuse de gauche (4L) est immobilisable sur l'autre unité de guidage respective (2),
par rapport à un plan situé au milieu entre les deux premiers plans (E₁), il est prévu différentes positions de fixation des unités formant ressort (8) sur les unités porteuses (4R, 4L).

10. Système de train de roulement selon la revendication 9,
dans lequel
l'unité porteuse de gauche (4L) est immobilisable sur l'une des deux unités de guidage (2), et
l'unité porteuse de droite (4R) ou l'unité porteuse de gauche (4L) est immobilisable sur l'autre unité de guidage respective (2), et
le moyen de fixation (47) de l'unité porteuse de gauche (4L) présente une première distance (Aₐₐ .. A_{cc}) par rapport au moyen de fixation (47) de l'unité porteuse de droite (4R).

11. Système de train de roulement selon la revendication 10,
dans lequel
lors d'un agencement échangé des unités porteuses (4L, 4R), la distance (Aₐₐ .. A_{cc}) des moyens de fixation (47) l'un par rapport à l'autre prend une autre valeur.

12. Système de train de roulement selon la revendication 8,
comprenant deux ensembles formant bras oscillant (1) selon la revendication 7,
dans lequel
les unités porteuses (4) sont immobilisables chacune dans une de deux positions de fixation sur l'unité de guidage respective (2), de telle sorte que les moyens de fixation (47) des unités porteuses (4) présentent une de deux distances possibles (Aₐₐ) l'une par rapport à l'autre.

13. Système de train de roulement selon l'une des revendications 8 à 12,
dans lequel
les unités porteuses (4, 4L, 4R) comprennent chacune trois moyens de fixation (47a, 47b, 47c),
au moins deux moyens de fixation (47a, 47b) sont écartés du second plan (E₂).

14. Procédé pour réaliser une unité porteuse (4) d'un ensemble formant bras oscillant (1) selon l'une des revendications 1 à 7, comprenant les étapes consistant à :
a) fournir un corps de base tubulaire (11),
b) mettre en oeuvre un procédé de mise en forme sur le corps de base (11), la géométrie extérieure du corps de base (11) étant déformée de telle sorte qu'il en résulte au moins deux surfaces de fixation (46) sur celui-ci,
c) appliquer un procédé de séparation sur le corps de base déformé (11), en réalisant au moins deux unités porteuses (4) à partir du corps de base (11),
dans lequel
chaque unité porteuse (4) comprend une seconde portion de fixation (42) et une portion de support (44), et
un second plan (E₂) se trouve au milieu et transversalement à la seconde portion de fixation (42) de l'unité porteuse (4),
**caractérisé en ce que**
la portion de support (44) est réalisée de façon asymétrique au second plan (E₂) et comprend un moyen de fixation (47) écarté du second plan (E₂) et destiné à immobiliser une unité formant ressort (8) sur la portion de support (44).
